# EUROPEAN PATENT SPECIFICATION

(11) **EP 2 160 336 B1**
(45) Date of publication and mention of the grant of the patent: **08.05.2013**
(21) Application number: 08756920.8
(22) Date of filing: 12.06.2008
(51) Int. Cl.: B65D 45/32, B65D 53/02, B65D 55/08, B65D 90/54, F16B 5/07, B65D 45/30

(54) **CONNECTING MECHANISM AND METHOD**
VERBINDUNGSMECHANISMUS SOWIE VERBINDUNGSVERFAHREN
MÉCANISME ET METHODE DE RACCORDEMENT

(30) Priority: 13.06.2007 AU 2007903176 P
(43) Date of publication of application: 10.03.2010
(73) Proprietor: Joinlock Pty Ltd, Tennyson QLD 4105 (AU)
(72) Inventor: CAMERON, Dean Osman, Maleny, Queensland 4552 (AU)
(74) Representative: Ramey, Daniel
(86) International application number: PCT/AU2008/000839
(87) International publication number: WO 2008/151368

(56) References cited:
- WO-A1-02/02982
- US-A- 4 412 370
- US-A- 4 518 277
- US-A- 5 930 872

## Description

This invention concerns a method for mechanically connecting two or more components togetherand to an assembly comprising two or more components. In particular, the invention concerns components having keyway arrangements and a keyway connector having keys retainable by the keyway arrangements so as to lock the components together to form a secure joint.

Plastic is a versatile material that can be rotationally cast, injection moulded, heated and vacuum or pressure formed and even draped over form-work to make a variety of shapes for various purposes. For mass production, injection moulding is a preferred method because it is fast, energy efficient and gives more precision of shape and size. It is, however, limiting in that internal cavities can't be made without welding or gluing the components together. For some plastics, especially those in the polyolefin group like the very popular polypropylene, gluing is not normally successful, so welding or using mechanical compression fittings and seals is the only real joining alternative. Compression fittings are limited in how big they can be in practice because of expense. They are also predominantly used for standard sized pipe as making compression fittings for the variety of shapes required for consumer items is not practical. Even if it were practical for small items, moulded compression fittings are not practical nor cost effective for large plastic parts, so in these circumstances fabrication and welding is the only realistic alternative.

Several methods of welding are practiced. Butt welding involves cutting and cleaning both surfaces to be joined and then heating them before they are pushed together while still molten. This type of joint can leave an internal weld bead which is difficult to remove and can cause ragging that could lead to blockages when used for sewer pipelines. Fusion welding, where fittings have electrical resistance wire built into the components to melt the plastic, is also popular. Fusion joints can be pushed together whilst clean, then electrical energy is used to heat the bonding surfaces of the joint to fuse the parts together and so achieve a good seal. Other forms of welding include ultrasonic and hot air welding and both are time consuming and require specialist equipment and skills to bond joints successfully and safely. All forms of welding can produce toxic fumes and require good ventilation or breathing apparatus to be worn.

This significantly limits the uses to which plastics could otherwise be put, because it is time consuming and expensive to fabricate good quality joints on large components. Also, getting smooth curves when cold bending plastics for fabricated components is problematic and so is seldom done commercially.

Drums and pails are commonly used for the storage of hazardous or messy liquids and powders. They must have positive seals that are robust, even when dropped. Commonly used bucket type clips are prone to leakage, have a limited shelf life and once opened are no longer very effective. Threads provide a positive joining method but are expensive to mould, especially on large plastic components, and if they become too large they are very difficult to undo or tighten in real world conditions. Threads also are limited to use on circular joint face profiles with planar joint faces.

WO 02/02982 A1 teaches an assembly system according to the preamble of claim 1 and comprising intermeshing toothed crowns that are locked together with a locking ring having a continuous annular body and a series of clamping wedges extending from the continuous annular body. Each clamping wedge is located between and bears against a pair of opposed teeth (one tooth from each toothed crown) that are offset relative to one another. Each clamping wedge bears against two teeth, as opposed to each clamping wedge engaging an individual tooth to lock the toothed crowns/tubes together.

The present inventor has now developed an assembly and a connecting method which minimises or overcomes one or more of the component-joining problems referred to above.

This invention relates to an assembly comprising at least a first component, a second component and a keyway connector, wherein each said component comprises at least one keyway arrangement extending along the component and keyways of the keyway arrangement are spaced apart from one another, wherein the keyway arrangements of the first and second components are aligned such that the keyways intermesh to provide a keyway passage extending longitudinally between the intermeshed keyways, and the keyway connector comprises an elongate body and an arrangement of keys, wherein said keys extend laterally off the body from opposing sides of the body and said keyway connector extends longitudinally within the keyway passage such that the keys engage the keyways of the keyway arrangements to lock the first and second components together.

Optionally, said keys individually engage and are retained by individual said keyways of the keyway arrangements to lock the first and second components together.

At least one said keyway may comprise a connector-support portion and a key-retaining portion, the connector-support portion extending beneath the keyway connector and the key-retaining portion extending around a said key.

At least one said keyway may be in the form of a hook and at least one said key is shaped so as to be retained by the hook.

Each said opposing side of the body may have a plurality of keys extending within the same plane and the keys are spaced apart from one another in accordance with the spacing of the keyways, the position of the keys alternate from one side of the body to the other along a length of the body, wherein the keys are slideable into locking engagement with the keyways or slideable out of locking engagement with the keyways.

The keyway connector may comprise a handle, lobe, grip surface or third component extending from or along the elongate body.

According to an embodiment of the invention:
a) the first component is in the form of a container and the second component is in the form of a closure for the container, the keyway arrangements extend along a circumference of the container and closure, and the keyway connector is annular;
b) the first component is in the form of a cylindrical wall section of a tank and the second component is in the form of discoid base connectable to the wall section of the tank, wherein the keyway arrangements extend along a circumference of the wall section and base, and the keyway connector is annular;
c) the first and second components are in the form of panels connectable edge to edge or face to face such that they extend substantially in the same plane or at different angles relative to one another; or
d) the first and second components are each in the form of a pipe, the keyway arrangements extend around abutting ends of said pipes, and the keyway connector is annular.

At least one of said first and second components may be in the form a cylindrical component or arcuate component.

At least one of said first and second components may be in the form of an annular component.

The invention also relates to a method for connecting at least a first component and a second component together to create the above-mentioned assembly, said method comprising the steps of:
aligning the keyway arrangements of the first and second components such that the keyways intermesh to provide the keyway passage extending longitudinally between the intermeshed keyways; and
extending the keyway connector longitudinally within the keyway passage such that the keys engage the keyways of the keyway arrangements to lock the first and second components together.

Preferred embodiments of the invention will now be described by way of example with reference to the accompanying figures.
Figure 1 is an exploded perspective view of various components of a tank, according to an embodiment of the present invention;
Figure 2 is the same as Figure 1 except that the tank has been partially assembled whereby two of the components have been brought into contact with one another;
Figure 3 is the same as Figure 2 except that all of the components have been brought into contact with one another, but have yet to be properly locked together;
Figure 4 is a close-up view of part of the tank shown in Figure 3;
Figure 5 is the same as Figure 3 except that all of the components have been locked together (curved joint);
Figure 6 is a close-up view of part of the assembled tank shown in Figure 5;
Figure 7 is a front perspective view of an assembly comprising two panel components connected together with a keyway connector, according to another embodiment of the present invention (curved joint);
Figure 8 is a rear perspective view of the connected panel components shown in Figure 7;
Figure 9 is a close-up view of the connected panel components shown in Figure 7 (curved joint);
Figure 10 is a side elevation view of the connected panel components shown in Figure 7; and
Figure 11 is a perspective view of an assembly comprising two flat panel components connected together with a keyway connector (flat joint), according to another embodiment of the present invention;
Figure 12 is a perspective view of an assembly comprising two panel components connected together with a keyway connector (recessed flat joint), according to another embodiment of the present invention;
Figure 13 is a perspective view of an assembly comprising two panel components connected together with a keyway connector (recessed flat joint providing a substantially continuous panel surface), according to another embodiment of the present invention;
Figure 14 is the same as Figure 13, except in an unlocked confirmation;
Figure 15 is a perspective view of an assembly comprising two panel components connected together with a keyway connector (comer joint), according to another embodiment of the present invention;
Figure 16 is the same as Figure 15, except in an unlocked configuration;
Figure 17 is a perspective view of an assembly comprising two panel components in the process of being connected together (comer joint), according to another embodiment of the present invention;
Figure 18 is a perspective view of a container assembly comprising two cuboid container halves ready to be connected together (flat joint), according to another embodiment of the present invention;
Figure 19 is a perspective view of a container assembly comprising a container base and closure connected together with keyway connectors (flat joint) ;
Figure 20 is a perspective view of a hemispherical reflector housing connected to a discoid part with a keyway connector (curved joint);
Figure 21 is a perspective view of a complex structure assembled using the connecting mechanism of the present invention (various joints);
Figure 22 shows different shaped keyways, according to other embodiments of the present invention;
Figure 23 is a perspective view of one or more keyway connectors extending within a continuous keyway passage;
Figure 24 is a front perspective view of an assembly comprising two panel components connected together with a keyway connector Figure 25 is a perspective view of an assembly comprising two panel components connected together with a keyway connector
Figure 26 is a perspective view of an assembly comprising two arcuate components connected together with keyway connectors
Figure 27 is a perspective view of an assembly comprising two components in the process of being connected together with a keyway connector
Figure 28 is a side elevation view of that shown in Figure 27;
Figure 29 is a perspective view of that shown in Figure 27 except that the two components have been connected together with the keyway connector (wing brace joint); and
Figure 30 is another perspective view of that shown in Figure 29.

In the figures, like reference numerals refer to like features.

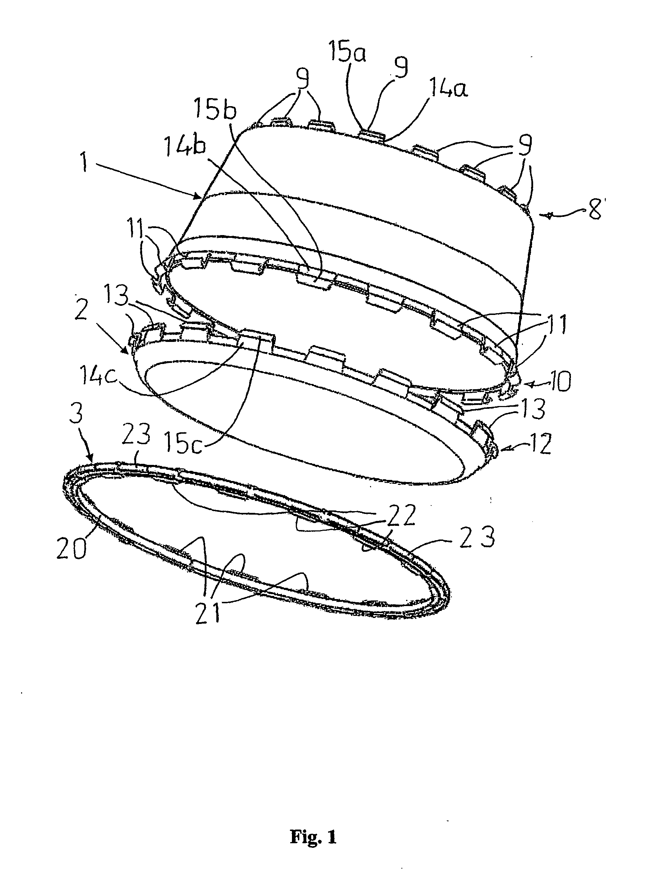

Figure 1 shows part of a plastic water tank comprising a cylindrical wall section 1, a discoid base 2 and a keyway connector 3. A keyway arrangement 8 extends along a circumference of an upper end of the wall section 1 and comprises a plurality of regularly spaced keyways 9. A keyway arrangement 10 also extends along a circumference of a lower end of the wall section 1 and comprises a plurality of regularly spaced keyways 11 (only some of which have been labelled).

Likewise, a keyway arrangement 12 extends along a circumference of the base 2 and comprises a plurality of regularly spaced keyways 13 (only some of which have been labelled).

The keyway connector 3 comprises an annular body 20, keys 21 (only some of which have been labelled) extending from one side of the body 20, keys 22 (only some of which have been labelled) extending from an opposite side of the body 20, and a handle 23 generally extending from the body 20 between the keys 21, 22. The keyway connector 3 is made of flexible plastics material.

Keys 21 extend in a common plane and are regularly spaced from one another. The spacing of keys 21 matches the spacing of keyways 13. Keys 22 also extend in a common plane and are regularly spaced from one another. The spacing of keys 22 matches the spacing of keyways 11. Key 21 and 22 are off-set relative to one another along a length of the body 20 in the same manner as keyways 11 and 13 when intermeshed.

Each keyway 9, 12, 13 is in the form of a hook clip having a connector-support portion 14a, 14b, 14c and a key-retaining portion 15a, 15b, 15c. Each key-retaining portion 15b, 15c may extend around a key 21, 22 of the keyway connector 3. Key-retaining portions 15b and 15c mesh externally of the wall section 1. Key-retaining portion 15a would mesh with keyways of another component internally of the wall section 1.

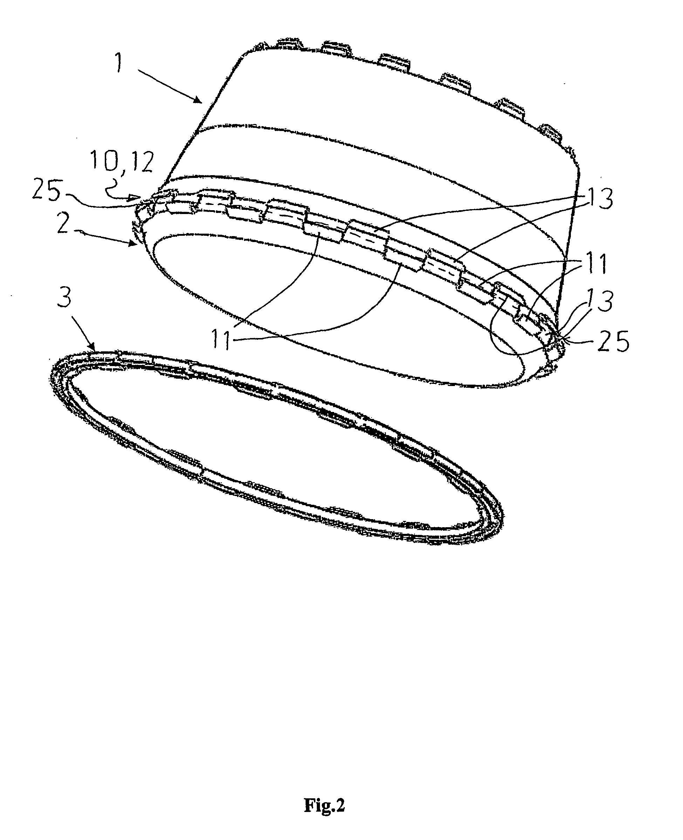

As shown in Figure 2, the keyways 11, 13 of the keyway arrangements 10, 12 can intermesh with one another such that each keyway 11 is straddled by two keyways 13. Keyways 11 and 13 intermesh to provide a continuous keyway passage 25 (indicated by a broken line) extending longitudinally between the intermeshed keyways 11, 13.

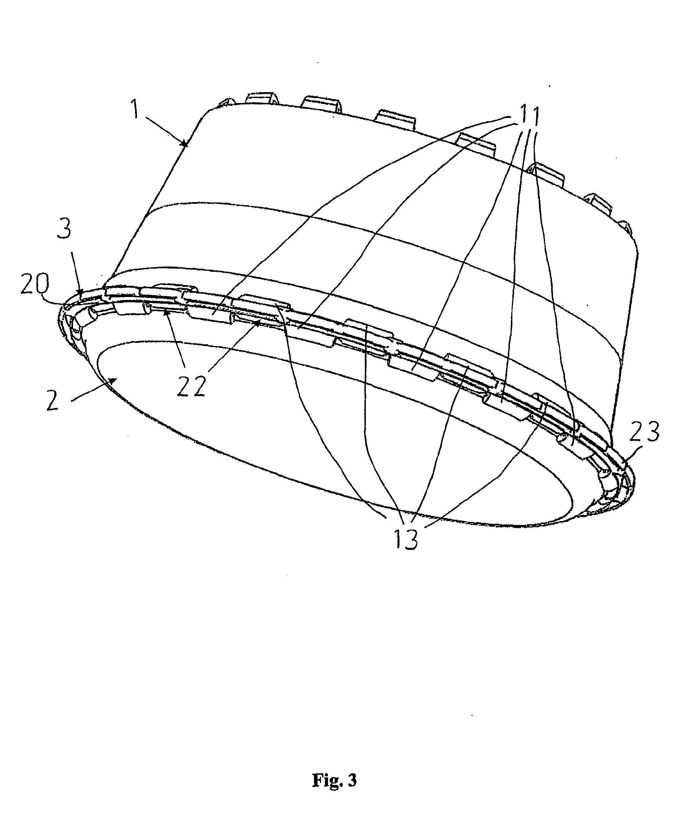

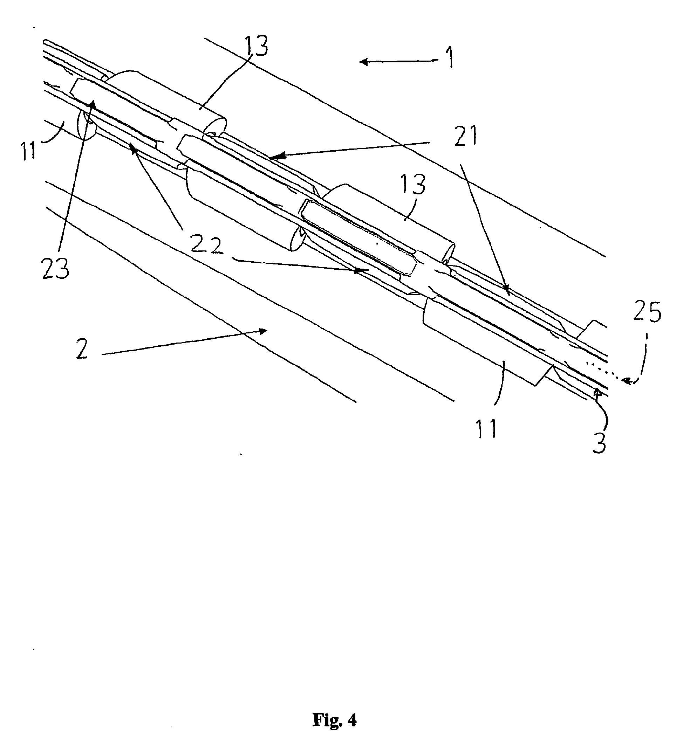

As shown in Figures 3 and 4, the keyway connector 3 is insertable longitudinally within the continuous keyway passage 25 when the keys 21, 22 are not positioned directly atop the keyways 11, 13. Once inserted, each connector-support portion 14b, 14c extends beneath the keyway connector 3 and each key-retaining portion 15b, 15c is potentially positioned to extend around a key 21, 22. This is best seen in Figure 4.

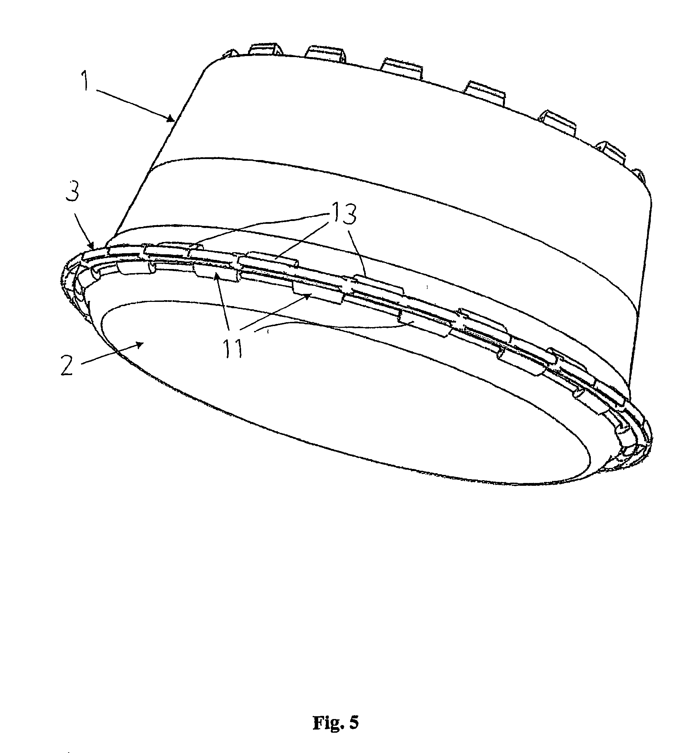

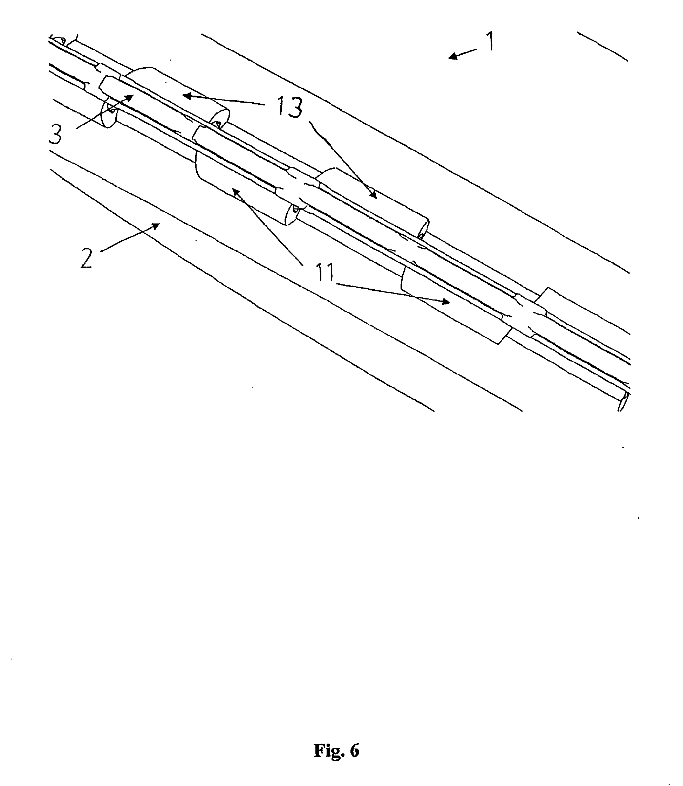

Once the keyway connector 3 extends within the passage 25, it can be slid relative to the keyways 11, 13 until the keys 21, 22 engage the keyways 11, 13 and are retained by the keyways 11, 13 so as to lock the wall section 1 and base 2 together and to form a secure curved joint. This is shown in Figures 5 and 6. To disconnect the wall section 1 from the base 2, the keyway connector 3 is slid within the passage 25 until the keys 21, 22 no longer engage the keyways 11, 13, as seen in Figure 3 and 4.

If required, another wall section like section 1 or a lid like base 2 may be connected to the upper region of wall section 1 by way of keyway arrangement 8. However, since the keyways 9 of keyway arrangement 8 face inwardly, a keyway connector would extend circumferentially within the interior of the tank.

It can be seen from Figures 2-6 that keyways 13 are fully backed by the lower region of wall section 1 and that keyways 11 are fully backed by a peripheral region of base 2 and so are inherently strong as most of the stress is resolved into tensile forces and bending moment by prestressing the keyways 11, 13 through the strongest central point of both the keyways 11, 13 and keyway connector 3, so minimizing the shear forces which for most materials are the weakest structural property.

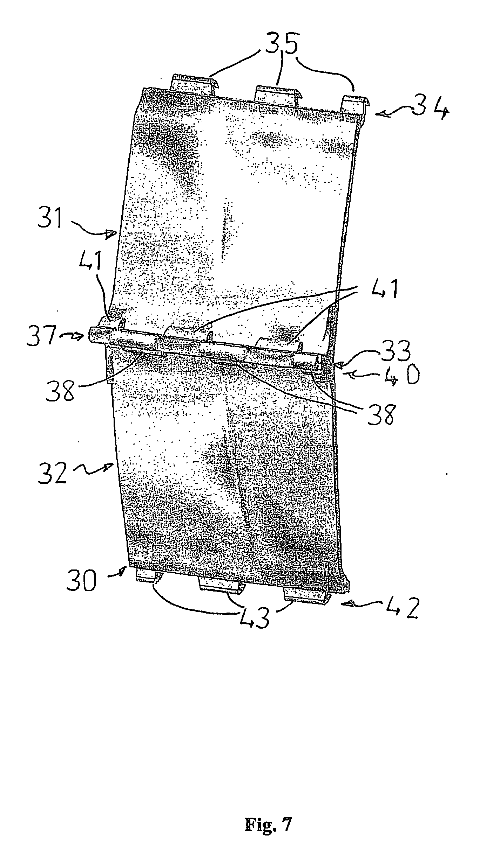

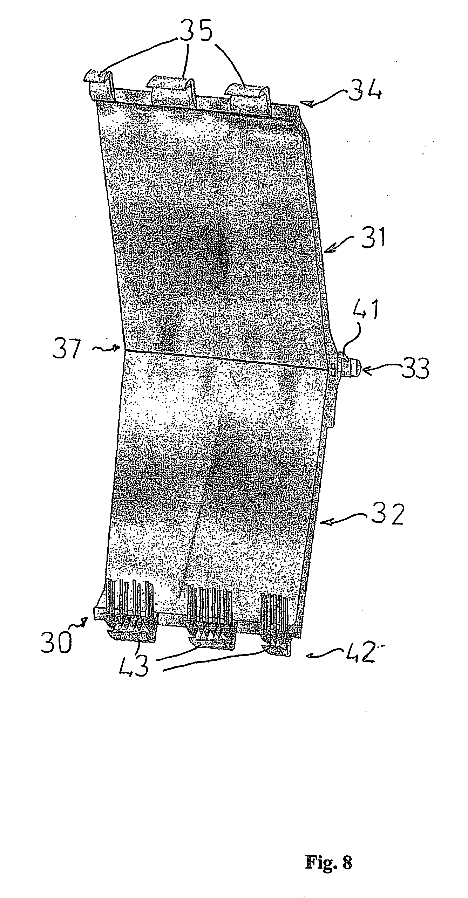

Referring now to Figures 7 to 10, there is shown a plastic panel assembly 30 comprising an upper panel component 31, a lower panel component 32 and a keyway connector 33. A keyway arrangement 34 extends along an upper edge of the upper panel 31 and comprises a plurality of regularly spaced keyways 35. A keyway arrangement 37 also extends along a lower edge of the upper panel 31 and comprises a plurality of regularly spaced keyways 38.

Likewise, a keyway arrangement 40 extends along an upper edge of the lower panel 32 and comprises a plurality of regularly spaced keyways 41. A keyway arrangement 42 also extends along a lower edge of the lower panel 32 and comprises a plurality of regularly spaced keyways 43.

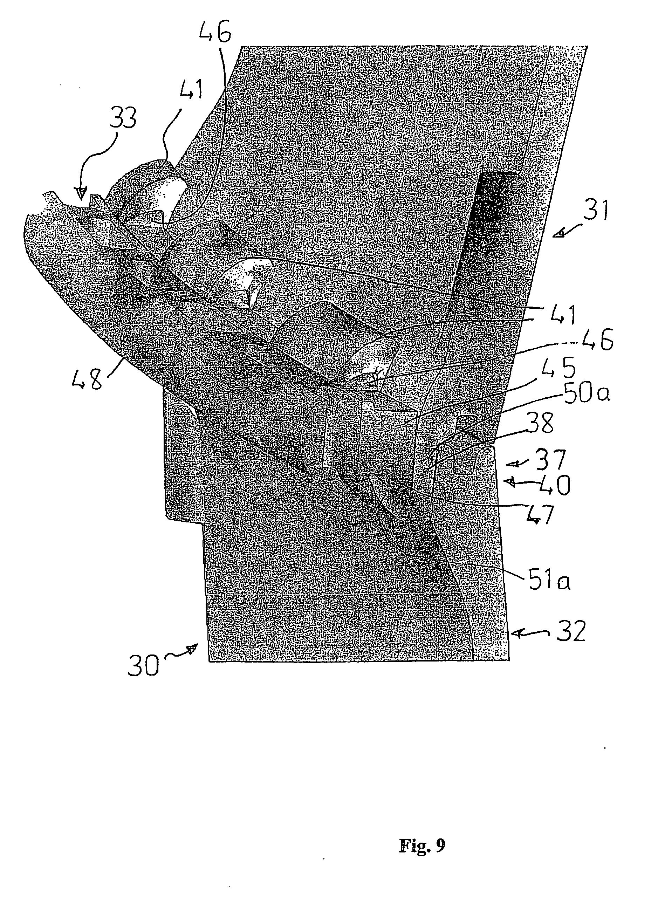

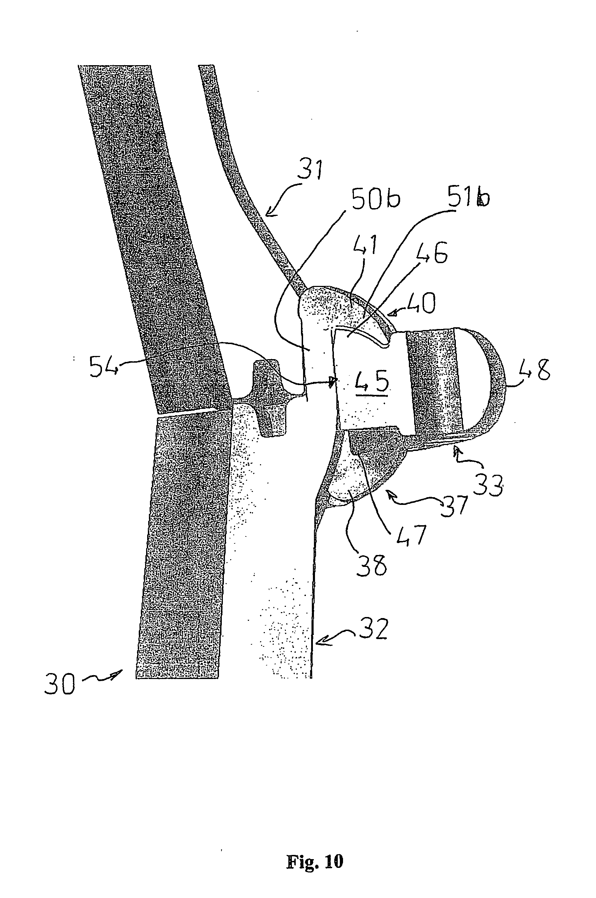

As seen in Figures 9 and 10, the keyway connector 33 comprises a longitudinal body 45, keys 46 extending from one side of the body 45, keys 47 extending from an opposite side of the body 45, and a handle 48 generally extending from above the body 45 between the sides of the body 45. The keyway connector 33 is made of plastics material.

Keys 46 extend in a common plane and are regularly spaced from one another. The spacing of keys 46 matches the spacing of keyways 41. Keys 47 also extend in a common plane and are regularly spaced from one another. The spacing of keys 47 matches the spacing of keyways 38. Keys 46 and 47 are off-set relative to one another along a length of the body 45 in the same manner as keyways 38 and 41 when intermeshed.

Each keyway 38, 41 is in the form of a hook having a connector-support portion 50a, 50b and a key-retaining portion 51a, 51b. Each key-retaining portion 51a, 51b may extend around a key 46, 47.

The keyways 38, 41 can intermesh with one another such that each keyway 41 is straddled by two keyways 38 of the other arrangement. Keyways 38 and 41 intermesh to provide a continuous keyway passage 54 extending longitudinally between the intermeshed keyways 38, 41 (see Figure 10).

The keyway connector 33 can be inserted laterally and slide longitudinally within the continuous keyway passage 54. Once inserted, each connector-support portion 50a, 50b extends beneath the keyway connector 33 and the key-retaining portion 51a, 51b is potentially positioned to extend around a key 46, 47. This is best seen in Figures 9 and 10.

Once the keyway connector 33 extends within the passage 54, it can be slid relative to the keyways 38, 41 until the keys 46, 47 engage the keyways 38, 41 and are retained by the keyways 38, 41 so as to lock the panels 31, 32 together to form a simple tight joint. To disconnect panel 31 from panel 32, the keyway connector 33 is slid within the passage 54 until the keys 46, 47 no longer engage the keyways 38, 41.

If required, another panel component may be connected to the upper region of panel 31 by way of keyway arrangement 34/keyways 35 or to the lower region of panel 32 by way of keyway arrangement 42/keyways 43, as described above.

It can be seen from Figures 9 and 10 that keyways 38 are fully backed by the upper region of panel 32 and that keyways 41 are fully backed by the lower region of panel 31, and so are inherently strong for the reasons described above for the tank.

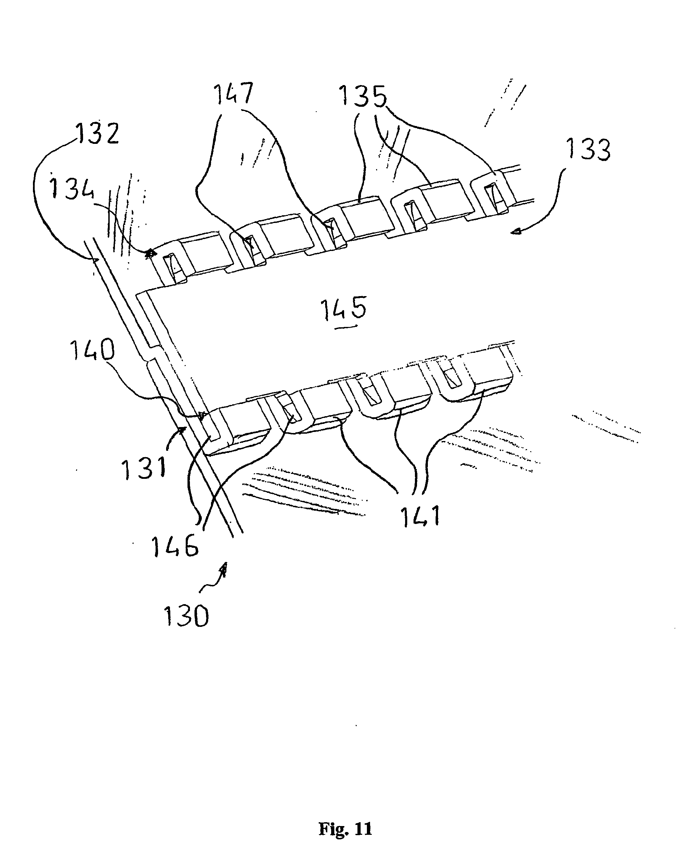

Referring now to Figure 11, there is shown a panel assembly 130 comprising a first substantially flat panel component 131, a substantially flat second panel component 132 and a keyway connector 133. A keyway arrangement 134 extends along a joining edge of the first panel 131 and comprises a plurality of regularly spaced keyways 135.

Likewise, a keyway arrangement 140 extends along a joining edge of the second panel 132 and comprises a plurality of regularly spaced keyways 141.

The keyway connector 133 comprises a longitudinal body 145, keys 146 extending from one side of the body 145 and keys 147 extending from an opposite side of the body 145.

Keys 146 extend in a common plane and are regularly spaced from one another. The spacing of keys 146 matches the spacing of keyways 141. Keys 147 also extend in a common plane and are regularly spaced from one another. The spacing of keys 147 matches the spacing of keyways 135. Keys 146 and 147 are off-set relative to one another along a length of the body 145 in the same manner as keyways 135 and 141 when intermeshed.

Each keyway 135, 141 is in the form of a hook having a connector-support portion and a key-retaining portion (as described in respect of Figures 7-10). Each key-retaining portion may extend around a key.

The keyways 135, 141 can intermesh with one another such that each keyway 141 is straddled by two keyways 135 of the other arrangement. Keyways 135 and 141 intermesh to provide a continuous keyway passage extending longitudinally between the keyways 135, 141.

The keyway connector 133 can be inserted laterally and slide longitudinally within the continuous keyway passage. Once inserted, each connector-support portion extends beneath the keyway connector 133 and the key-retaining portion is potentially positioned to extend around a key 146, 147.

Once the keyway connector 133 extends within the passage, it can be slid relative to the keyways 135, 141 until the keys 146, 147 engage the keyways 135, 141 and are retained by the keyways 135, 141 so as to lock the panels 131, 132 together to form a simple flat joint providing a continuous planar surface. To disconnect panel 131 from panel 132, the keyway connector 133 is slid within the passage until the keys 146, 147 no longer engage the keyways 135, 141.

Keyways 135 are fully backed by the joining edge of panel 132 and keyways 141 are fully backed by the joining edge of panel 131, and so are inherently strong for the reasons described above.

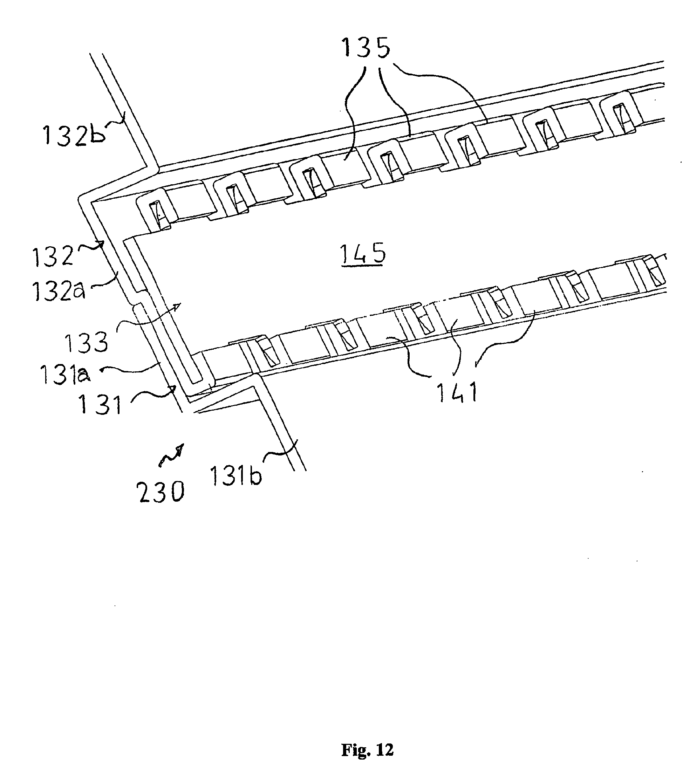

Referring now to Figure 12, there is shown a panel assembly 230 like assembly 130 shown in Figure 11, except that the joint is recessed. That is, the first and second panel components 131, 132 have joining edges 131a, 132a that are in spaced parallel planes to adjoining regions of the panels 131, 132, namely panel regions 131b and 132b.

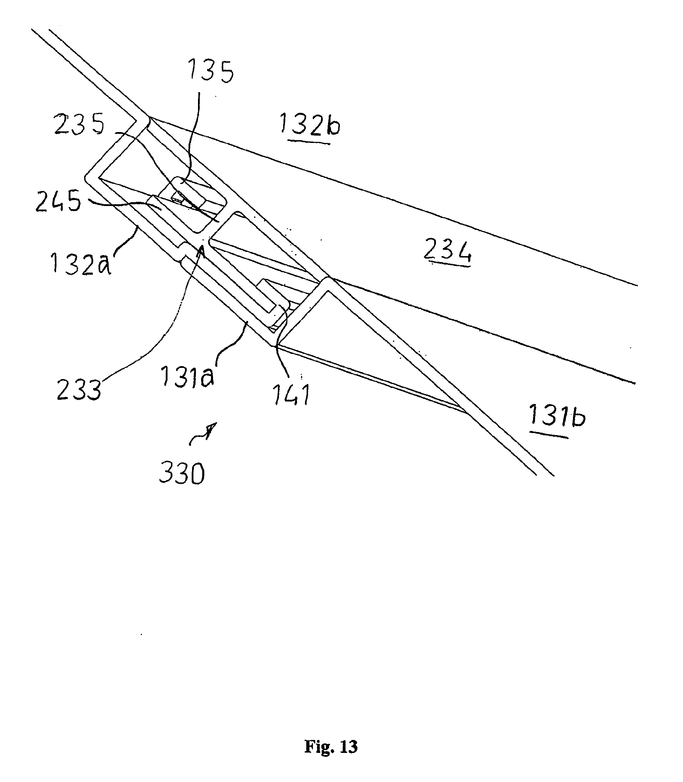

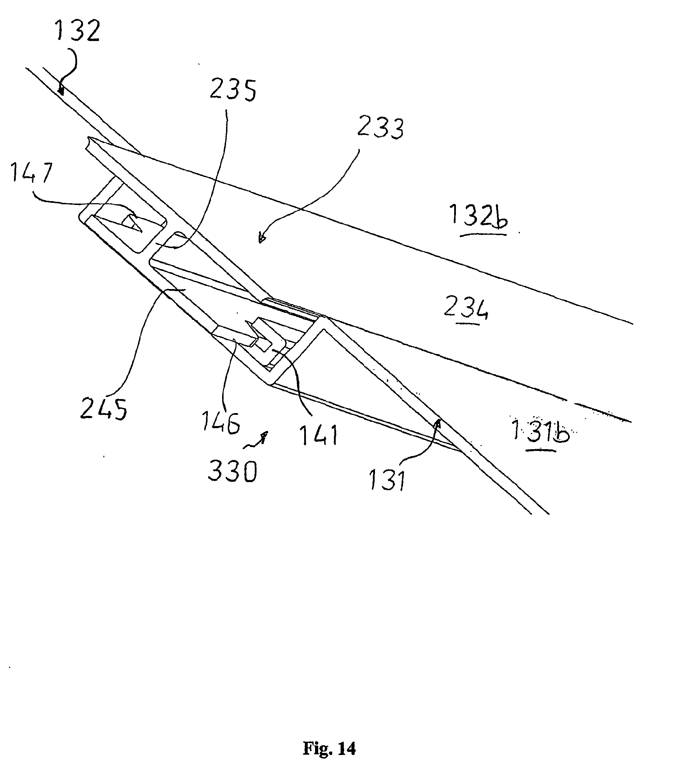

Referring now to Figures 13 and 14, there is shown a panel assembly 330 like assembly 230 shown in Figure 12, except that the keyway connector 233 is shaped to provide a continuous smooth surface with panel regions 131b and 132b.

The keyway connector 233 has a longitudinal body 245, like body 145 shown in Figure 12. The keyway connector 233 also has a longitudinal strip 234 and an interconnecting wall 235. Longitudinal strip 234 extends parallel with body 245 and in the same plane as panel regions 131b and 132b, so as to provide a continuous smooth surface. Interconnecting wall 235 extends perpendicularly from body 245 to strip 234.

Figure 13 shows the assembly 330 locked together whereas Figure 14 shows the keyway connector 233 in a position whereby its keys 146, 147 do not engage the keyways 135, 141 and the keyway connector 233 may be readily released from the panels 131, 132.

This type of joint is useful for cosmetic facing panels in aircraft cabins, car interior panels or building walls, for example. The recessed joint can also be used to create stiffening elements when joining two panels, such as structural pillars in cars or chassis boxing.

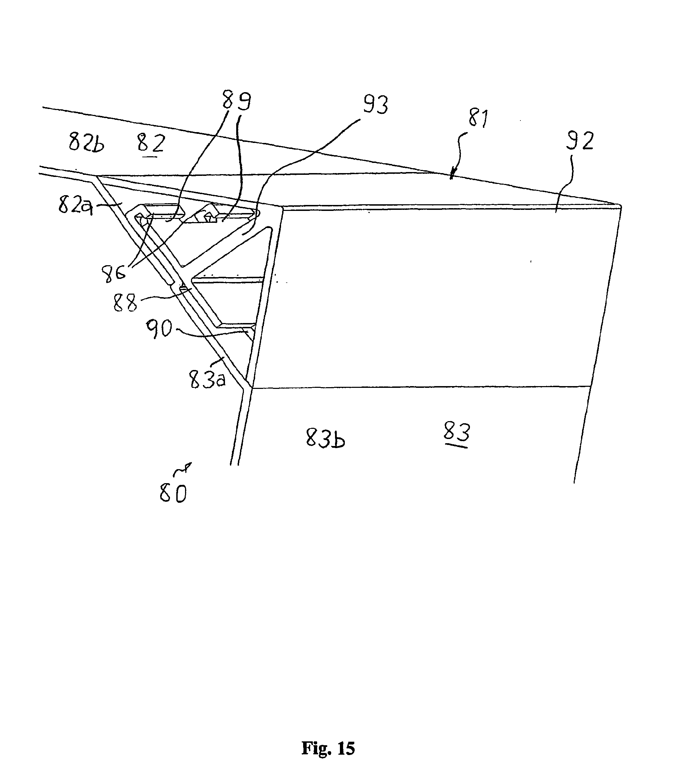

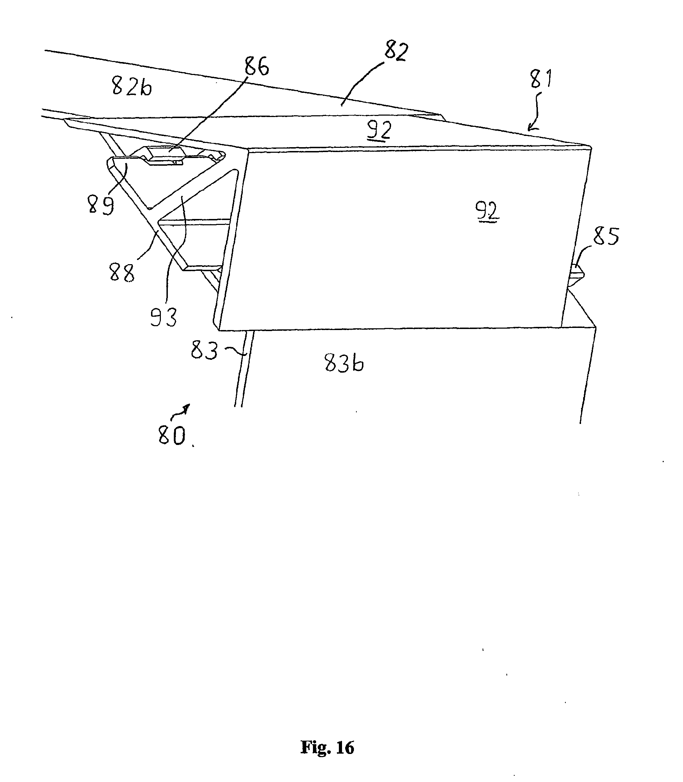

Referring now to Figures 15 and 16, there is shown a panel assembly 80 like assembly 330 shown in Figure 14, except that the keyway connector 81 is shaped as a corner piece that provides a continuous surface with diverging first and second panel components 82, 83.

The first and second panels 82, 83 each have a joining edge 82a, 83a that extend in the same plane when joined together. The first and second panels 82, 83 each has a region 82b, 83b and these extend away from one another.

The keyway connector 81 has a longitudinal body 88, an L-shaped wall 92 and an interconnecting wall 93. Keys 89 extend from one side of the body 88 and keys 90 extend from an opposite side of the body 88. The L-shaped wall 92 has diverging halves that are able to provide continuous surfaces with panel regions 82b and 83b. The interconnecting wall 93 extends perpendicularly from the body 88 to L-shaped wall 92.

The key/keyway arrangement of assembly 80 is essentially the same as shown in Figure 14. However, in brief, a keyway arrangement extends along the joining edge 82a of the first panel 82 and comprises a plurality of regularly spaced keyways 85. Likewise, a keyway arrangement extends along the joining edge 83a of the second panel 83 and comprises a plurality of regularly spaced keyways 86.

The keyway connector 81 can be inserted laterally and slide longitudinally within a continuous keyway passage provided by the keyways 85, 86. Once the keyway connector 81 extends within the passage, it can be slid relative to the keyways 85, 86 until the keys 89, 90 engage their respective keyways 85, 86 and are retained by the keyways 85, 86 so as to lock the panels 82, 83 together (as shown in Figure 15). To disconnect panel 82 from panel 83, the keyway connector 81 is slid within the passage until the keys 89, 90 no longer engage their respective keyways 85, 86 (as shown in Figure 16).

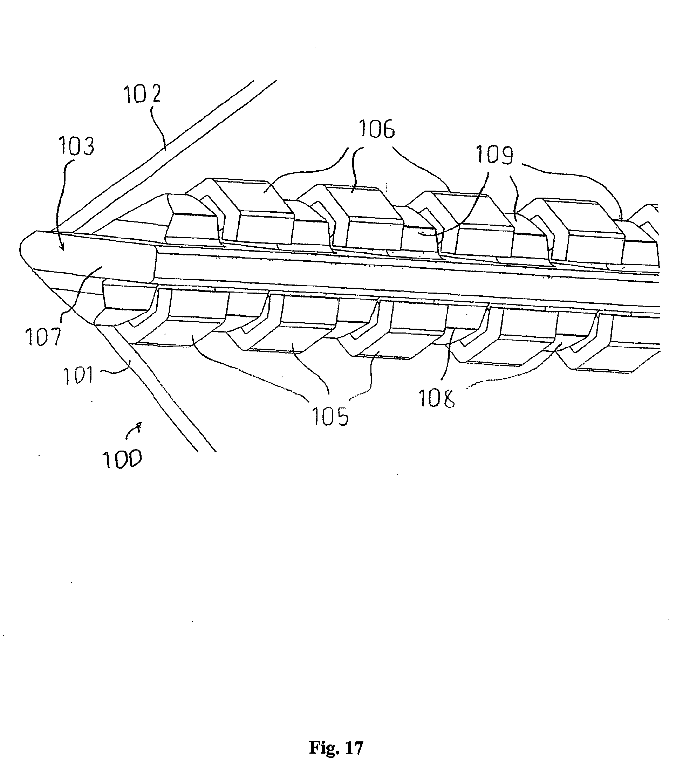

Referring now to Figure 17, there is shown a panel assembly 100 comprising a first panel component 101, a second panel component 102 and a keyway connector 103. A keyway arrangement extends along a joining edge of the first panel 101 and comprises a plurality of regularly spaced keyways 106. A keyway arrangement also extends along a joining edge of the second panel 102 and comprises a plurality of regularly spaced keyways 105.

The keyway connector 103 comprises a longitudinal body 107, keys 108 extending from one side of the body 107 and keys 109 extending from an opposite side of the body 107.

Keys 108 extend in a common plane and are regularly spaced from one another. The spacing of keys 108 matches the spacing of keyways 105. Keys 109 also extend in a common plane and are regularly spaced from one another. The spacing of keys 109 matches the spacing of keyways 106. Keys 108 and 109 are off-set relative to one another along a length of the body 103 in the same manner as keyways 105 and 106 when intermeshed.

Each keyway 105, 106 is in the form of a hook, as described for other embodiments. The keyways 105, 106 can intermesh with one another such that each keyway 105 is straddled by two keyways 106 of the other component. Keyways 105 and 106 intermesh to provide a continuous keyway passage extending longitudinally between the intermeshed keyways 105, 106.

The keyway connector 103 can be inserted laterally and slide longitudinally within the continuous keyway passage. Once the keyway connector 103 extends within the passage, it can be slid relative to the keyways 105, 106 until the keys 108, 109 engage the keyways 105, 106 and are retained by the keyways 105, 106 so as to lock the panels 101, 102 together to form a tight corner joint. To disconnect panel 101 from panel 102, the keyway connector 103 is slid within the passage until the keys 108, 109 no longer engage the keyways 105, 106, as shown in Figure 17.

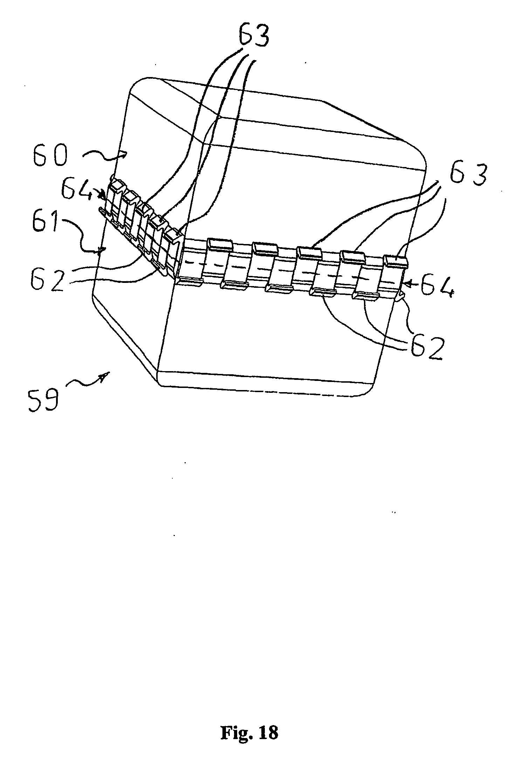

Referring now to Figure 18, there is shown upper 60 and lower 61 cuboid halves of a plastic container assembly 59. Four linear keyway connectors of the assembly 59 have not been illustrated.

A keyway arrangement extends along a lower joining edge of the upper half 60 and comprises a plurality of regularly spaced keyways 62 (only some of which have been labelled). A keyway arrangement also extends along an upper joining edge of the lower half 61 and comprises a plurality of regularly spaced keyways 63 (only some of which have been labelled).

Each keyway connector comprises a longitudinal body, keys extending from one side of the body, keys extending from an opposite side of the body, and a handle generally extending from the body between the keys - much like the keyway connector shown in Figure 7.

All of the keys extend in a common plane and are regularly spaced from one another in a castellated manner such that they match the spacing of keyways 62 and 63 when intermeshed.

Each keyway connector can be inserted laterally and slid longitudinally within a continuous keyway passage 64 when the keys are not positioned directly atop the keyways 62, 63. Once a keyway connector extends within the passage 64, it can be slid relative to the keyways 62, 63 until the keys engage and are retained by the keyways 62, 63 so as to lock the container halves 60, 61 together and to form a secure planar joint. To disconnect the container halves 60, 61 from one another, the keyway connector is slid within the passage until the keys no longer engage the keyways 62, 63.

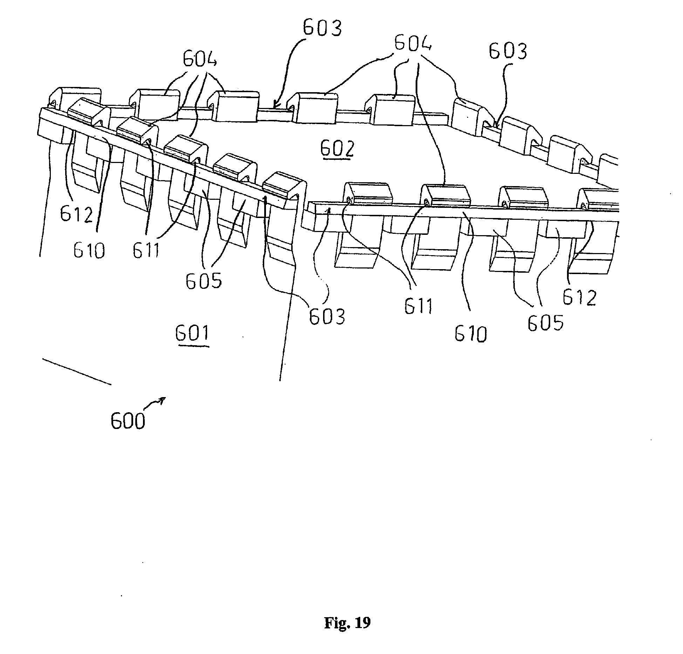

Referring now to Figure 19, there is shown a container assembly 600 comprising a container base 601 and closure 602 connected together with four keyway connectors 603.

A keyway arrangement extends along an upper joining edge of container base 601 and comprises a plurality of regularly spaced hooked keyways 604 (only some of which have been labelled). A castellated keyway arrangement also extends along a periphery of closure 602 and comprises a plurality of regularly spaced (non-hooked) keyways 605 (only some of which have been labelled).

Each keyway connector 603 comprises a longitudinal body 610 with keys 611 extending laterally off an upper side of the body. The lower side of the body 610 interference fits with keyways 605.

Keys 611 extend in a common plane and are regularly spaced from one another in a castellated manner such that they match the spacing of keyways 604 when intermeshed.

Each keyway connector 603 can be inserted laterally and slid longitudinally within a keyway passage (as described for other embodiments). Once a keyway connector 603 extends within the passage, it can be slid relative to the keyways 604, 605 until keys 611 engage and are retained by keyways 604 so as to lock the base 601 and closure 602 together and to form a secure planar joint.

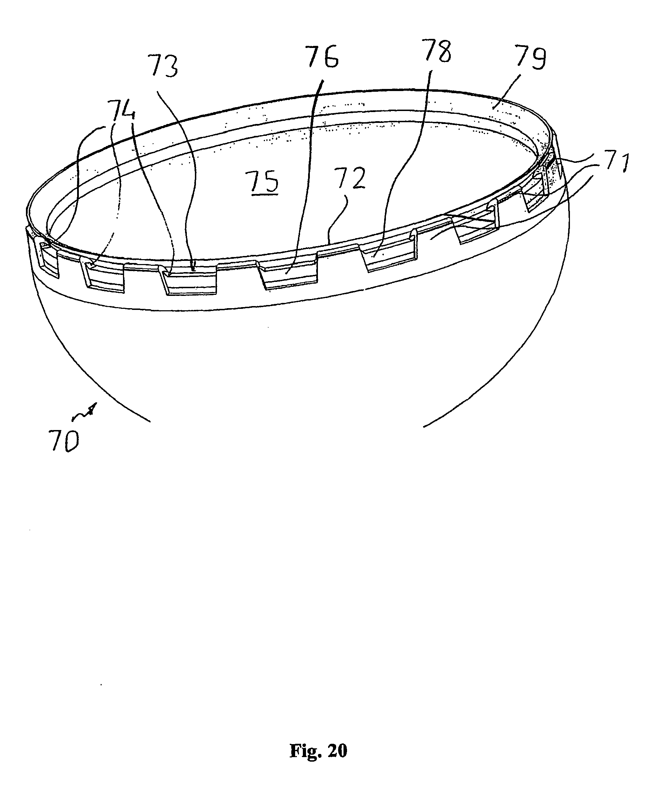

Referring now to Figure 20, there is shown a hemispherical reflector housing 70 connected to a discoid lens component 75 with a keyway connector 73. A keyway arrangement having regularly spaced inwardly facing keyways 71 extends along an outer circumference of the housing 70. A planar surface (not labelled) of the housing 70 situated beneath the keyway connector 73 functions as another keyway.

The keyway connector comprises a split annular body 76 and an annular cosmetic flange 79 that partially covers keyways 71. The keyway connector 73 has a series of castellated keys 74 that extend from an upper side of the body 76 and engage a hook of each keyway 71. A continuous (un-castellated) key (not labelled) extends along a lower side of the body 76.

An annular keyway passage extends between keyways 71 and the keyway provided by the planar surface of the housing 70.

The discoid lens component 75, when inserted into this keyway passage, essentially forms a smaller keyway passage into which the keyway connector 73 fits. There may be one or more substantially discoid components laminated between this uncastellated keyway surface and keyway connector 73.

Because of the split in the keyway connector body 76, it can be flexed laterally under the keyway 71 hooks so that the castellated keys 74 lie between them prior to extending the keyway connector 73 longitudinally underneath the hook shaped keyways 71. This action wedges and retains a smooth edged discoid component 75 between the uncastellated surface of the housing 70 and the key/lower side of the keyway connector body 76.

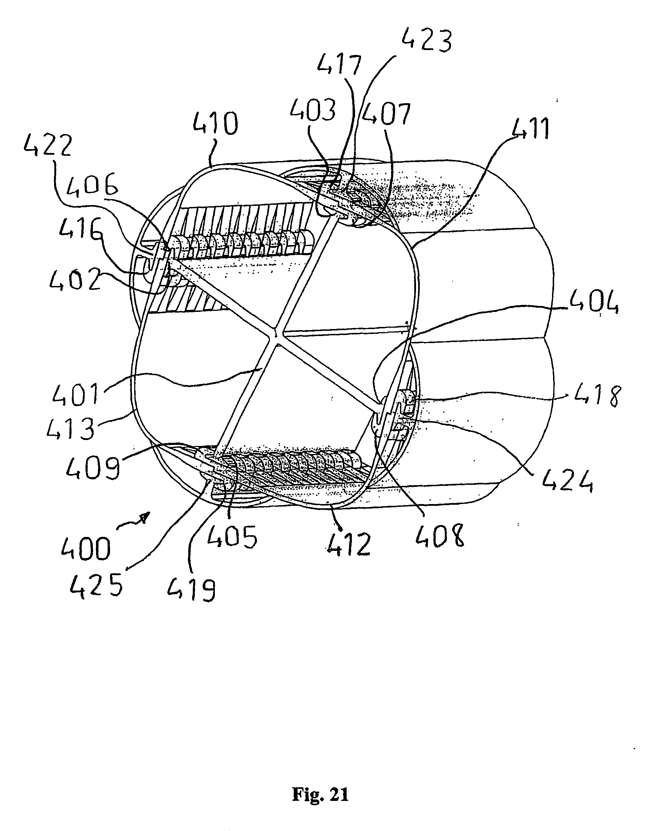

Figure 21 shows that the connecting mechanism of the present invention can be used to assemble different shape components into complex structures 400 (such as an aircraft wing).

A cross-shaped keyway connector 401 serves as a bracing and tie element. The keyway connector 401 has four diverging arms and keys 402, 403, 404, 405 located at an end of each arm. Keys 402, 403, 404, 405 engage four different pairs of keyway arrangements 406, 407, 408, 409, which arrangement pairs 406, 407, 408, 409 connect adjacent arcuate panels 410, 411, 412, 413 together. Additional pairs of keyway arrangements 416, 417, 418, 419 and keyway connectors 422, 423, 424, 425 provide additional joint strength as well as rounded external surfaces for aesthetic purposes.

Although not entirely clear from the figure, a single key may extend laterally off each opposing side of each arm - rather than a plurality of spaced keys extending laterally off each opposing side of each arm. That is, the keyway connectors shown in Figure 21 need not have castellated keys, but can rather can have a leading edge that allows the key to be inserted from one side.

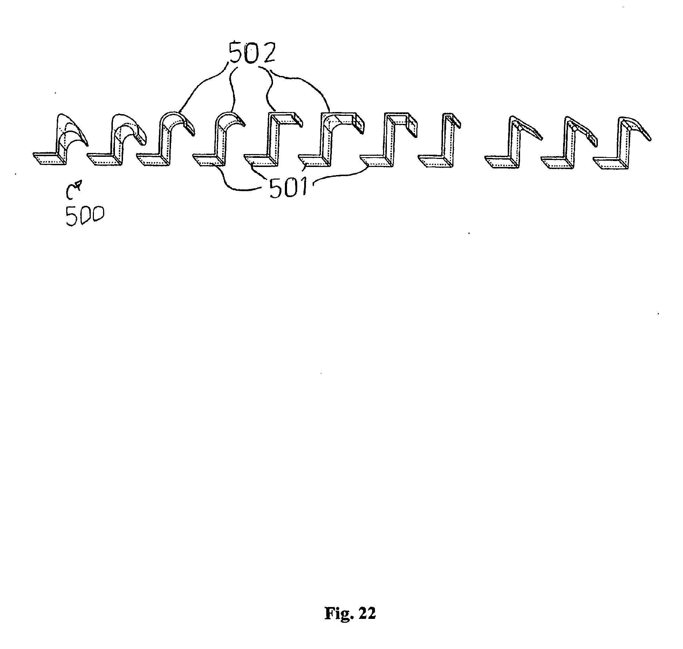

Referring now to Figure 22, there is shown some of the differently shaped keyways 500 according to the present invention. Each keyway 500 is in the form of a hook having a connector-support portion 501 and a key-retaining portion 502 (only some of which have been labelled). Depending on the intended application, each key-retaining portion 502 may be arcuate and/or angular, provided that it can extend part way around a key of a keyway connector.

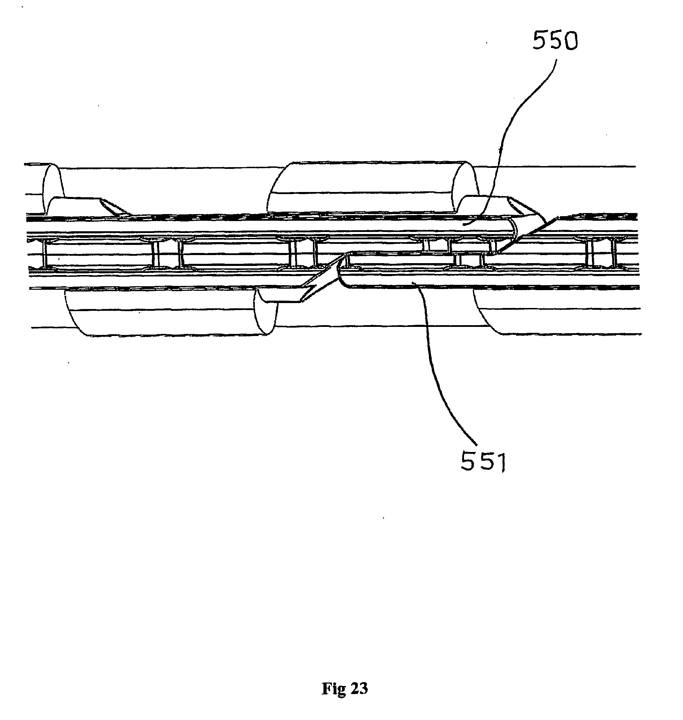

Referring now to Figure 23, there is shown two ends 550, 551 of an annular keyway connector interference fitting together, or two ends 550, 551 of adjacent keyway connectors interference fitting together. Multiple short keyway connectors interference fitting together could be used for large components having a long keyway passage, that could otherwise be difficult to join together using a single keyway connector.

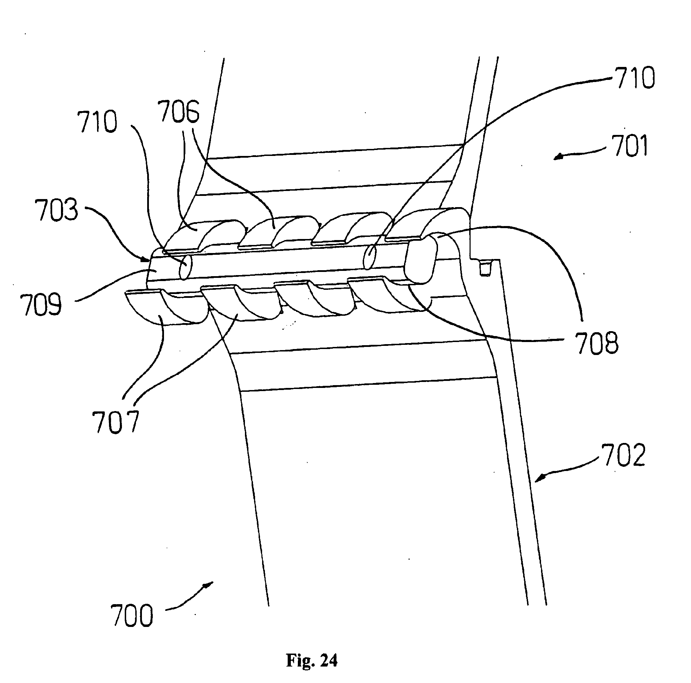

Referring now to Figure 24, there is shown a plastic panel assembly 700 comprising an upper panel component 701, a lower panel component 702 and a keyway connector 703. A keyway arrangement extends along a lower edge of the upper panel 701 and comprises a plurality of regularly spaced hooked keyways 706. A keyway arrangement also extends along an upper edge of the upper panel 702 and comprises a plurality of regularly spaced hooked keyways 707. The keyways 706, 707 intermesh and provide a keyway passage as previously described in respect of Figures 7 to 10.

The keyway connector 703 comprises an elongate body 709 having a cross-sectional shape of a rounded oblong (ovoid). Opposing arcuate sides of the body can engage and be retained by the keyways 706, 707. The body 709 has openings 710 for tools for rotating the connector 703 relative to its longitudinal axis through a 90 degree rotation, between locking (as seen in Figure 24) and unlocking positions. The connector 703 functions as a cam lock.

The keyway connector 703 can be inserted laterally and slide longitudinally within the keyway passage when in the unlocked position. Once the keyway connector 703 extends within the passage, it can be rotated through an angle of about 90 degrees to the locking position, in which position the keys 708 forcefully engage the keyways 706, 707 and lock the panels 701, 702 together.

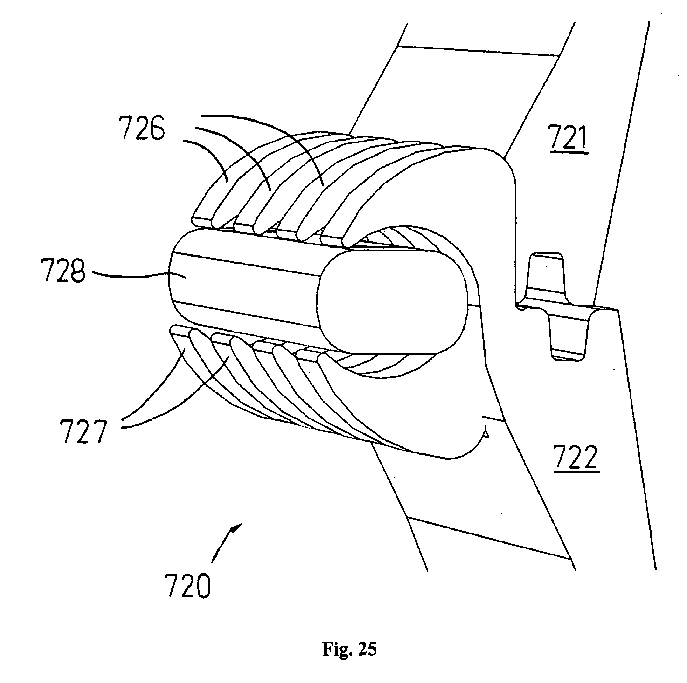

Referring now to Figure 25, there is shown a panel assembly 720 much like assembly 700. The major differences are that the panel components 721, 722 are slightly different and keyways 726, 727 are of smaller width and spacing relative to one another. Also, tools openings are not shown for keyway connector 728 of the assembly 720. The keyway connector 728 is shown in an unlocked position.

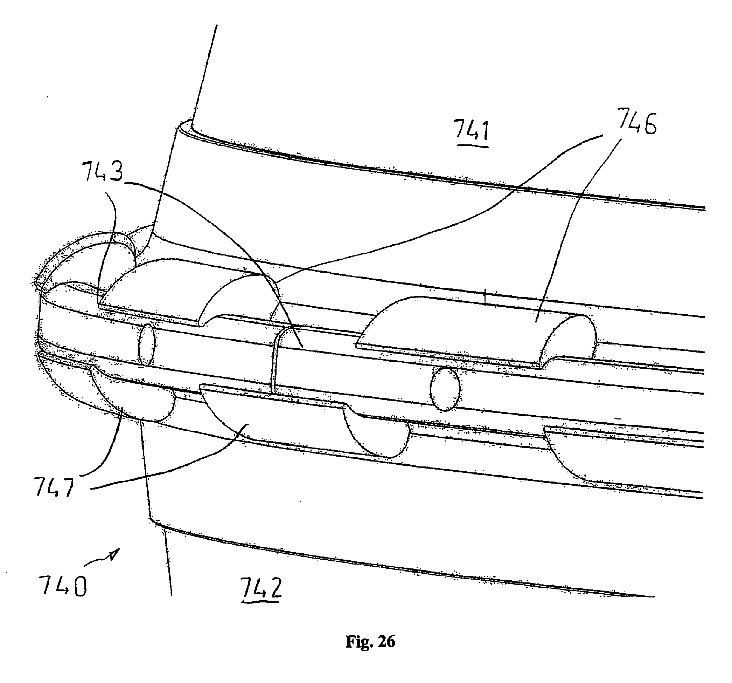

Referring now to Figure 26, there is shown an assembly 740 comprising upper 741 and lower 742 arcuate components connected together with keyway connectors 743. Again, assembly 740 is much like assembly 700. The major differences are that the components 741, 742 and the keyway connector 743 are arcuate, and keyways 746, 747 are of greater width and spacing relative to one another.

Since the joint is of an arcuate nature, more than one keyway connector 743 (or a multi-piece connector) is used. As for assembly 700, each connector 743 can be inserted laterally and slide longitudinally within a keyway passage when in an unlocked position. Once the keyway connector 743 expends within the passage, it can be rotated through an angle of about 90 degrees to a locking position, in which position keys of the connector 743 forcefully engage the keyways 743, 744 and lock the components 741, 742 together.

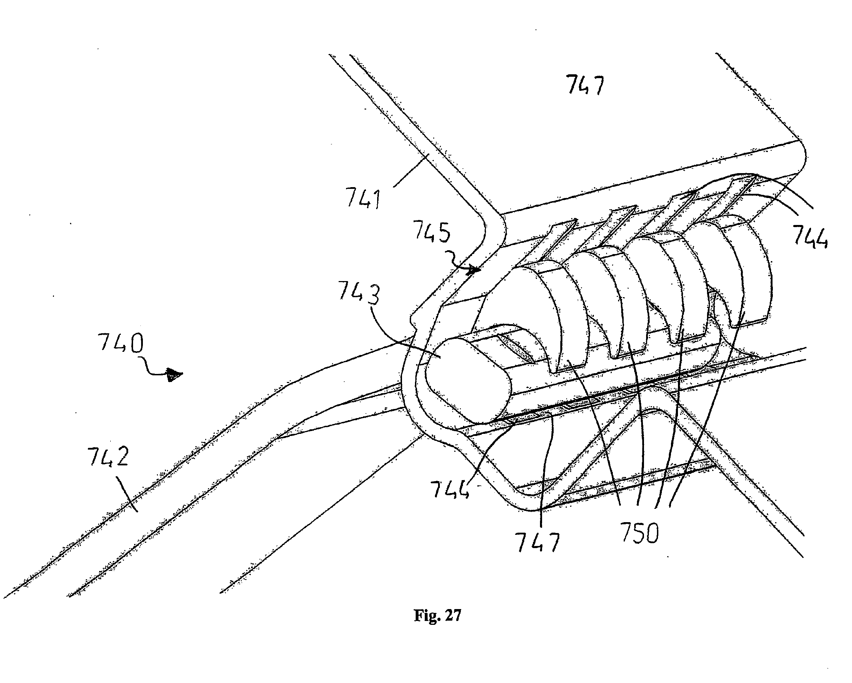

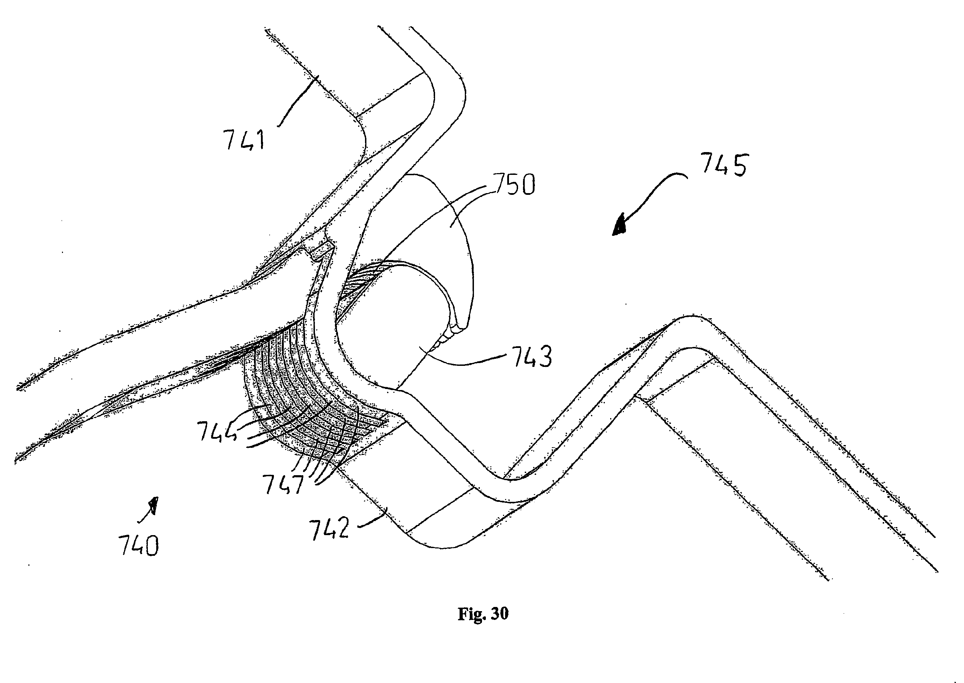

Referring now to Figures 27 to 30, there is shown an assembly 740 comprising two components 741, 742 and a keyway connector 743. Component 741 has an arcuate pocket 745 having a linear array of slits 744. The pocket 745 also has a keyway arrangement whereby keyways 747 of the arrangement are provided by non-slitted regions of the pocket 745. The keyways 747 extend transversely of the pocket 745. This can be best seen in Figure 30.

An edge of component 742 also has a keyway arrangement consisting of four hooked keyways 750. The keyways 750 may be extended into the pocket 745 by way of the slits 744.

The keyway connector 743 is essentially the same as connector 709 of Figure 24. Opposing arcuate sides of a body of the connector 743 function as keys that can engage and be retained by the keyways 747. The body also has handles or openings for tools to act as handles for rotating the connector 743 relative to its longitudinal axis through a 90 degree rotation, between locking and unlocking positions. The connector 743 functions as a cam to lever the keyways apart and lock the joint.

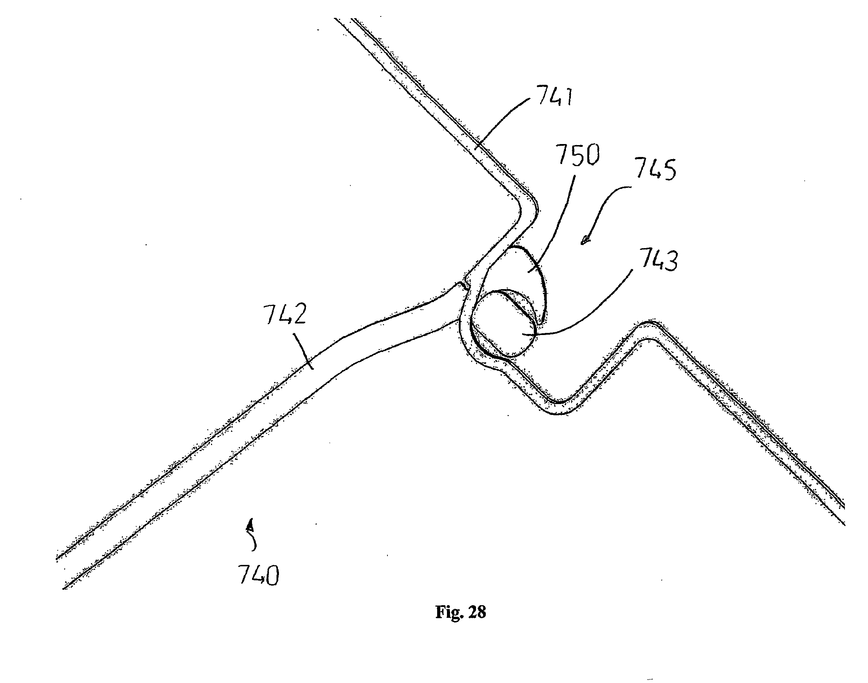

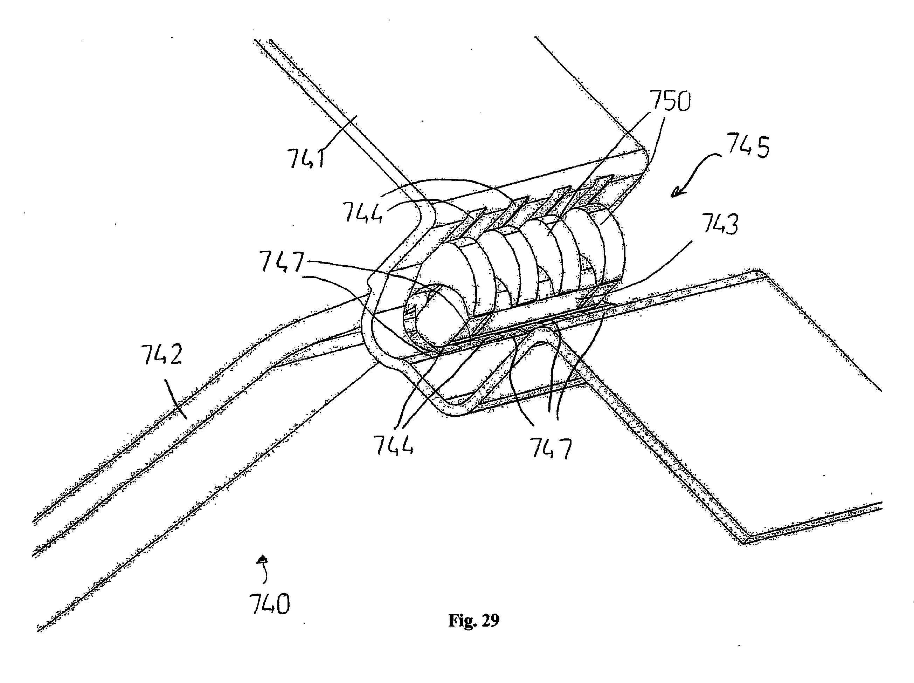

The keyway connector 743 can be inserted laterally and slide longitudinally within the keyway passage when in the unlocked position. Once the keyway connector 743 extends within the passage, it can be rotated through an angle of about 90 degrees to the locking position, in which position the keys forcefully engage the keyways 744, 750 and lock the components 741, 742 together. Figures 29 and 30 show the connector 743 in the locked position (wing brace joint) whereas Figures 27 and 28 show the connector 743 in the unlocked position. In the locked position, the keyways 750 bear against a non-slitted region of the pocket 745, as seen in Figure 30.

The connecting method as exemplified (except as shown in the Figures 19, 20 and 21) involves creating a series of intermeshing (castellated) keyways along a jointing face and extending below the joint plane on each component. The keyways are shaped to retain keys of a keyway connector. The connector can be made of one or several curved or straight profiles made to match the profiles of the joint face, and has complementary keys which allow it to be inserted between opposing keyways in such a way that by moving the connector parallel to the joint face the assembly can be positively locked into position, with the keyways shaped to retain the keys in position when the joint is placed. The keyway connector bends to take the loads imposed by the components on the joint. This spring tensioning force is an important part of the connecting mechanism and distinguishes it markedly from a typical hinge, which it superficially resembles. (The hinge pin experiences a shear force at the junctions of the hinge castellations, rather than a flexural force.)

The present connecting method overcomes several component joining problems especially (although not exclusively) for larger plastic components and also has application for smaller components especially where a sealed internal cavity is required. With this connecting method it is much cheaper and faster to produce injection moulding and pressing methods can in many circumstances be substituted for more expensive and limiting rotational moulding, welding, bolting and threading.

The present invention delivers a strong and, if necessary, gas tight joint that is more robust to shock loads. It is much faster to make than traditional joining methods and the flexible, but strong, holding technique allows successful joints to be made even where the parts are made of traditionally incompatible, brittle or innovative composite materials.

The connecting mechanism is straight forward to produce using existing mass production techniques, such as injection moulding, forging, pressing, casting, moulding, extrusion, roll forming, punching and laser cutting.

The present connecting method has the advantage of providing a strong positive joint and being able to be moulded, wrought or extruded more cheaply than for other joins in a wide variety of applications ranging from aviation industry, construction through to buildings and consumer products.

Further uses and advantages of the present invention are described below.

### The present connecting method supports complex joint faces and planes

Unlike a traditional helical thread the present connecting method can be made to conform to complex shapes involving straight edges and convex and concave multi-radius organic curves, and can even be made to seal non-planar joints and non-contiguous joint lines which in the past could only be joined by bolted flanges or welding. Vehicles, especially cars and planes, are good examples of products which have many such joins and because of the limitations of welded, bolted, screwed and riveted joins they are expensive to mass produce and especially to repair after structural damage. It also means that they can not be easily made of more light weight flexible materials like injection moulded plastics or plastic/fibre composites or pressed or cast carbon fibre composites without much greater expense. Joint planes are often a weak point in large designs because they provide an opportunity for shear stresses along a flat plane. Most plastics like metals have much higher tensile strength than shear strength. Threaded joints have the disadvantage that they can either over tighten or unscrew when deployed on a driven shaft and grub screws and conventional keyways damage or interfere with thread seals and can shear off under load. The present connecting method allows components to be designed for high torque joints that substitute much more robust compressive forces for shear forces through the use of serrated, castellated, sinuous or even randomly juxtapositioned joint "planes".

### The present connecting method allows for multi-component and multi-material interlocking joins

Multi-component interfaces can also be constructed using the present connecting method that would be virtually impossible to mould because of undercuts and parting plane complexity. Joints can be constructed using one material or completely dissimilar materials. For example, one joint component in a multi-component assembly could be made of ceramics, one of metal and one of plastic, and the keyway connector could be made of yet another material to achieve different structural outcomes for each joint.

### The present connecting method allows for tailored joint rigidity

In some cases a very rigid inflexible joint may be required, so the components could be made of very high tensile materials and more keyway and keyway connector interference could be designed so that the joint is prestressed when locked up to compensate for the forces expected when the joint is under stress. In other cases a flexible joint that can withstand and flex under shock loads is required so a tough but elastic material would be chosen for the keyway connector or components.

### The present connecting method allows for a join without reorienting the key components

Many dissimilar non-weldable materials are joined in electrical and automotive assemblies. Insulating plastics and metals are a good example. The components can often not be screwed together because connecting wires will tangle short circuit or break if rotated so the components are either over-moulded or crimped together making them disposable items, even though they could easily be repaired were it not for the difficulty of opening and resealing the joints. The keyway connector joint would be a much better way to provide a positive non-screwed joint where the keyway connector moves but the components remain in the correct relationship to each other.

### The present connecting method promotes higher levels of reuse

Another application for the present connecting method is for reusable plastic pails. The seals between the lid and buckets, once broken, are not suitable for storing hazardous or messy materials. They also have a limited life span as the plastic relaxes over time and can leak air in, which could react with the contents, or the contents could leak out. Making the existing bucket type clip seal more rigid by thickening the profile or increasing the interference is not always an option as, if it becomes too stiff, the lid can not be removed manually and levers may permanently damage the clip or seal. This in practice limits the size of the clip seal too, as a larger diameter clip seal will be too hard to unclip. The keyway connector is a much more positive seal and can be reused many times, thus reducing materials consumption. It also enables a replaceable spout or funnel to be quickly connected to the rim of the container so that the contents can be decanted to another container more safely and cleanly.

### The present connecting method allows for bigger seals

Because joints utilising the keyway connector can be clamped up incrementally, it is possible to quickly make huge sealed joints that would be otherwise impossible to make other than by welding them. On very large tanks, for example, plastics are seldom used despite their superior corrosion resistance to metals because they have to be fabricated *in situ.* The present connecting method will allow large tanks to be economically constructed using prefabricated panels that can be transported in compact stacks and assembled quickly on site with just a mallet needed to complete the task, as it doesn't require expensive and noisy generators or heavy batteries as hot wire, butt or hot air seam welding does.

### The present connecting method provides structural bracing

On large diameter water tanks the internal force of water will tend to open up joints and stretch the wall material. Because the keyway can be designed to wedge parts together in two directions so that the keyway connector itself can be wedged into high friction contact with the parts, so the keyway connector can be made to act like a continuous lateral rib providing enormous hoop strength and stiffness to a structure and can even be used to create a box girder construction to increase stiffness without greatly increasing cost or wall thickness. This is particularly important where the box beam constructed is to be used as sacrificial or reusable formwork for long spans in building and construction applications such as, for example, bridge beams, structural girders, light or power poles, elevated water header towers, multi-storey building shells and suspended flooring.

Long curvilinear beams in particular can be constructed *in situ* using lightweight plastic formwork that can even be hollow to save materials and then have reinforced concrete pumped into it in a continuous operation. In corrosive or highly saline or seaside environments, where corrosion of concrete reinforcing steel is a billion dollar problem, the sealed formwork can simply be sacrificed to permanently protect the concrete.

Passages can be moulded into the formwork for reinforcing steel, or alternative reinforcing materials such as high tensile plastic strapping materials can be used and by sequential casting of multiple cavity formwork, the reinforcing materials can be prestressed *in situ.* Aesthetic patterns can be cast or moulded into the surface of visible sacrificial formwork, or onto the relief side of reusable formwork.

### The present connecting method allows for greater transport efficiency

Transportation of large tanks and components is very expensive, as they are inherently bulky. There is a heavy greenhouse gas emission associated with essentially moving air large distances. The present connecting method will allow tanks to be cheaply transported in nested stacks or panels that can be assembled at or near the final destination.

### The present connecting method supports much greater design flexibility

Modem vernacular architecture is boxy and boring predominantly because of the horrendous cost of fabricating complex surface formwork. The huge cost blow out on the construction of the iconic Sydney Opera House is a salient reminder to architects and subconsciously informs their conservative rectilinear designs. Complex compound shell structures can become as affordable as more staid design by using the present connecting method. Extremely complex forms can be fabricated and replicated in a variety of arrays using a suite of tangentially interfacing interlocking panel forms. Light weight and rapid to transport and erect shell structures can be made for prefabricated plastic housing for temporary shelters in refugee or other humanitarian housing crisis situations. And by burying structural shells, passive super energy efficient earth sheltered structures could be made more affordable than conventional prefabricated box construction houses.

### The present connecting method allows for extruded components

Where long wall profiles are required, such as in large diameter tanks, the wall profile can be extruded and the keyways either punched off during extrusion or co-moulded. This will allow very large wall sections to be made of any material that can be extruded, such as various grades and alloys of aluminium, steel, plastic and the like. It would even be practical to construct low cost pressure vessels or large underground storage tanks using this technique.

### The present connecting method allows for securing smooth edged components

Where it is required to attach a smooth edged component such as a spotlight lens into a reflector housing, for instance, a keyway passage can be formed which has one side formed by the smooth edge and the other side formed by the castellated hooks of the keyway arrangement. The keyway connector would then only have keys arranged on one side. Such an arrangement is illustrated in Figure 20.

The there are some cases where there are advantages from using a non-castellated keyway connector which has a singe key on each side of the keyway connector. If the frictional forces are high however from the interference fit into the keyway it may be impossible to draw the keyway connector through a long keyway passage. An alternative is to shape the keyway in the form of a cam that can be easily inserted between the keyways when twisted 90 degrees from its locked position. Locking can then be accomplished by rotating the key 90 degrees in either direction after insertion. Figures 24-30 illustrate this embodiment. Depending on the flexibility of the locking keyway connector and the diameter of an annular keyway passage it is still possible to employ this method. The natural memory of the flexible keyway connectors can be employed to advantage to stabilize the keyway connector from rolling and allowing the joint to loosen. This arrangement is shown in Figure 26.

There is often a need to join the edge of one part to the face of another. In this application the two parts can be stitched together by punching a linear array of slots across the sheet to allow the hook shaped keyway ends to penetrate through and be locked in position by any suitable keyway connector as illustrated in Figures 27-30 (the wing brace joint). The joint could be recessed and keyway connector could also have a cosmetic face so that the joint results in a smooth surface profile as would be required for aerodynamic structural elements.

The foregoing embodiments are illustrative only of the principles of the invention, and various modifications and changes will readily occur to those skilled in the art. The invention is capable of being practiced and carried out in various ways and in other embodiments. It is also to be understood that the terminology employed herein is for the purpose of description and should not be regarded as limiting.

The term "comprise" and variants of the term such as "comprises" or "comprising" are used herein to denote the inclusion of a stated integer or stated integers but not to exclude any other integer or any other integers, unless in the context or usage an exclusive interpretation of the term is required.

## Claims

1. An assembly comprising at least a first component (1), a second component (2) and a keyway connector (3), wherein each said component (1, 2) comprises at least one keyway arrangement (10, 12) extending along the component (1, 2) and keyways (11, 13) of the keyway arrangement (10, 12) are spaced apart from one another, wherein the keyway arrangements (10, 12) of the first and second components (1, 2) are aligned such that the keyways (11, 13) intermesh to provide a keyway passage (25) extending longitudinally between the intermeshed keyways (11, 13), and the keyway connector (3) an arrangement of keys (21, 22), **characterised in that** said keyway connector comprises an elongate body (20) and said keys (21, 22) extend laterally off the body (20) from opposing sides of the body (20) and said keyway connector (3) extends longitudinally within the keyway passage (25) such that the keys (21, 22) engage the keyways (11, 13) of the keyway arrangements (10, 12) to lock the first and second components (1, 2) together.

2. The assembly of claim 1, wherein said keys (21, 22) individually engage and are retained by individual said keyways (11, 13) of the keyway arrangements (10, 12) to lock the first and second components (1, 2) together.

3. The assembly of claim 1 or claim 2, wherein at least one said keyway (11, 13) comprises a connector-support portion (14a, 14b, 14c) and a key-retaining portion (15a, 15b, 15c), the connector-support portion (14a, 14b, 14c) extending beneath the keyway connector (3) and the key-retaining portion (15a, 15b, 15c) extending around a said key (21, 22).

4. The assembly of any one of claims 1 to 3, wherein at least one said keyway (11, 13) is in the form of a hook and at least one said key (21, 22) is shaped so as to be retained by the hook.

5. The assembly of any one of claims 1 to 4, wherein each said opposing side of the body (20) has a plurality of keys (21, 22) extending within the same plane and the keys (21, 22) are spaced apart from one another in accordance with the spacing of the keyways (11, 13), the position of the keys (21, 22) alternate from one side of the body (20) to the other along a length of the body (20), wherein the keys (21, 22) are slideable into locking engagement with the keyways (11, 13) or slideable out of locking engagement with the keyways (11, 13).

6. The assembly of any one of claims 1 to 5, wherein the keyway connector (3) comprises a handle (23), lobe, grip surface or third component extending from or along the elongate body (20).

7. The assembly of any one of claims 1 to 6, wherein:
a) the first component is in the form of a container (1) and the second component is in the form of a closure (2) for the container (1), the keyway arrangements (10, 12) extend along a circumference of the container (1) and closure (2), and the keyway connector (3) is annular;
b) the first component is in the form of a cylindrical wall section (1) of a tank and the second component is in the form of discoid base (2) connectable to the wall section (1) of the tank, wherein the keyway arrangements (10, 12) extend along a circumference of the wall section (1) and base (2), and the keyway connector (3) is annular;
c) the first and second components are in the form of panels (31, 32) connectable edge to edge or face to face such that they extend substantially in the same plane or at different angles relative to one another; or
d) the first and second components are each in the form of a pipe, the keyway arrangements extend around abutting ends of said pipes, and the keyway connector is annular.

8. The assembly of any one of claims 1 to 6, wherein at least one of said first and second components is in the form of a cylindrical component or arcuate component.

9. The assembly of any one of claims 1 to 6, wherein at least one of said first and second components is in the form of an annular component.

10. A method for connecting at least a first component (1) and a second component (2) together to create the assembly of any one of claims 1 to 9, said method comprising the steps of:
aligning the keyway arrangements (10, 12) of the first and second components (1, 2) such that the keyways (11, 13) intermesh to provide the keyway passage (25) extending longitudinally between the intermeshed keyways (11, 13); and
extending the keyway connector (3) longitudinally within the keyway passage (25) such that the keys (21, 22) engage the keyways (11, 13) of the keyway arrangements (10, 12) to lock the first and second components (1, 2) together.

## Patentansprüche

1. Baugruppe umfassend mindestens eine erste Komponente (1), eine zweite Komponente (2) und ein Keilnutverbindungselement (3), wobei jede der Komponenten (1, 2) mindestens eine Keilnutanordnung (10, 12) umfasst, die sich entlang der Komponente (1, 2) erstreckt, und Keilnuten (11, 13) der Keilnutanordnung (10, 12) voneinander beabstandet angeordnet sind, wobei die Keilnutanordnungen (10, 12) der ersten und der zweiten Komponente (1, 2) derart ausgerichtet sind, dass die Keilnuten (11, 13) ineinandergreifen, so dass eine Keilnutführung (25) vorgesehen ist, die sich längsgerichtet zwischen den ineinandergreifenden Keilnuten (11, 13) erstreckt, und das Keilnutverbindungselement (3) eine Anordnung von Passformen (21, 22) umfasst,
**dadurch gekennzeichnet, dass**
das Keilnutverbindungselement einen langgestreckten Körper (20) umfasst und die Passformen (21, 22) sich von gegenüberliegenden Seiten des Körpers (20) seitlich vom Körper (20) weg erstrecken und das Keilnutverbindungselement (3) sich längsgerichtet in der Keilnutführung (25) derart erstreckt, dass die Passformen (21, 22) in die Keilnuten (11, 13) der Keilnutanordnungen (10, 12) eingreifen, so dass die erste und die zweite Komponente (1, 2) aneinander festgelegt werden.

2. Baugruppe nach Anspruch 1, bei der die Passformen (21, 22) einzeln eingreifen und durch einzelne der Keilnuten (11, 13) der Keilnutanordnungen (10, 12) gehalten werden, so dass die erste und die zweite Komponente (1, 2) aneinander festgelegt werden.

3. Baugruppe nach Anspruch 1 oder Anspruch 2, bei der mindestens eine der Keilnuten (11, 13) einen Verbindungs-Trägerbereich (14a, 14b, 14c) und einen Passform-Haltebereich (15a, 15b, 15c) umfasst, wobei der Verbindungs-Trägerbereich (14a, 14b, 14c) sich unter dem Keilnutverbindungselement (3) erstreckt und der Passform-Haltebereich (15a, 15b, 15c) sich um die Passform (21, 22) erstreckt.

4. Baugruppe nach einem der Ansprüche 1 bis 3, bei der mindestens eine der Keilnuten (11, 13) in Form eines Hakens ausgebildet ist und mindestens eine der Passformen (21, 22) so gestaltet ist, dass sie vom Haken gehalten werden kann.

5. Baugruppe nach einem der Ansprüche 1 bis 4, bei der jede der gegenüberliegenden Seiten des Körpers (20) eine Mehrzahl von Passformen (21, 22) aufweist, die sich in der gleichen Ebene erstrecken, und die Passformen (21, 22) gemäß dem Abstand der Keilnuten (11, 13) voneinander beabstandet sind, die Positionen der Passformen (21, 22) von einer Seite des Körpers (20) zur anderen entlang einer Länge des Körpers (20) abwechseln, wobei die Passformen (21, 22) in einen Feststelleingriff mit den Keilnuten (11, 13) verschiebbar sind oder aus einem Feststelleingriff mit dem Keilnuten (11, 13) heraus verschiebbar sind.

6. Baugruppe nach einem der Ansprüche 1 bis 5, bei der das Keilnutverbindungselement (3) eine Handhabe (23), Lasche, Greiffläche oder dritte Komponente umfasst, die sich vom oder entlang des langgestreckten Körpers (20) erstreckt.

7. Baugruppe nach einem der Ansprüche 1 bis 6, bei der:
a) die erste Komponente in Form eines Behälters (1) ausgebildet ist und die zweite Komponente in Form eines Verschlusses (2) für den Behälter (1) ausgebildet ist, die Keilnutanordnungen (10, 12) sich entlang eines Umfangs des Behälters (1) und des Verschlusses (2) erstrecken und das Keilnutverbindungselement (3) ringförmig ausgebildet ist,
b) die erste Komponente in Form eines zylindrischen Wandabschnitts (1) eines Tanks ausgebildet ist und die zweite Komponente in Form einer scheibenförmigen Basis (2) ausgebildet ist, die mit dem Wandabschnitt (1) des Tanks verbindbar ist, wobei die Keilnutanordnungen (10, 12) sich entlang eines Umfangs des Wandabschnitts (1) und der Basis (2) erstrecken und das Keilnutverbindungselement (3) ringförmig ausgebildet ist,
c) die erste und die zweite Komponente in Form von Platten (31, 32) ausgebildet sind, die Kante-an-Kante oder Fläche-an-Fläche derart verbindbar sind, dass sie sich im Wesentlichen in die gleiche Ebene oder in unterschiedlichen Winkeln zueinander erstrecken, oder
d) die erste und die zweite Komponente jeweils in Form eines Rohrs ausgebildet sind, die Keilnutanordnungen sich um Stoßkanten der Rohre erstrecken und das Keilnutverbindungselement ringförmig ausgebildet ist.

8. Baugruppe nach einem der Ansprüche 1 bis 6, bei der mindestens eine der ersten und zweiten Komponente in Form einer zylindrischen Komponente oder einer bogenförmigen Komponente ausgebildet ist.

9. Baugruppe nach einem der Ansprüche 1 bis 6, bei der mindestens eine der ersten und zweiten Komponente in Form einer ringförmigen Komponente ausgebildet ist.

10. Verfahren zum Verbinden mindestens einer ersten Komponente (1) und einer zweiten Komponente (2) miteinander, so dass die Baugruppe nach einem der Ansprüche 1 bis 9 ausgebildet wird, wobei das Verfahren die Schritte umfasst:
Ausrichten der Keilnutanordnungen (10, 12) der ersten und der zweiten Komponente (1, 2) derart, dass die Keilnuten (11, 13) ineinandergreifen, so dass eine Keilnutführung (25) vorgesehen wird, die sich längsgerichtet zwischen den ineinandergreifenden Keilnuten (11, 13) erstreckt, und
Anordnen des Keilnutverbindungselements (3) in Längsrichtung innerhalb der Keilnutführung (25) derart, dass die Passformen (21, 22) in die Keilnuten (11, 13) der Keilnutanordnungen (10, 12) eingreifen, so dass die erste und die zweite Komponente (1, 2) aneinander festgelegt werden.

## Revendications

1. Assemblage comprenant au moins un premier composant (1), un second composant (2) et un connecteur (3) à rainures-et-clavettes, dans lequel chacun desdits composants (1, 2) comprend au moins un agencement à rainures (10, 12) s'étendant le long du composant (1, 2) et des rainures (11, 13) de l'agencement à rainures (10, 12) sont espacées les unes des autres, dans lequel les agencements à rainures (10, 12) du premier et du second composant (1, 2) sont alignés de telle façon que les rainures (11, 13) engrènent réciproquement pour constituer un passage en rainure (25) s'étendant longitudinalement entre les rainures (11, 13) en engrènement réciproque, et le connecteur à rainures-et-clavette (3) comprend un agencement de clavettes (21, 22), **caractérisé en ce que** ledit connecteur à rainures-et-clavettes comprend un corps allongé (20) et lesdites clavettes (21, 22) s'étendent latéralement depuis le corps (20) depuis des côtés opposés du corps (20) et ledit connecteur à rainures-et-clavettes (3) s'étend longitudinalement dans le passage en rainure (25) de telle façon que les clavettes (21, 22) engagent les rainures (11, 13) des agencements à rainures (10, 12) pour bloquer le premier et le second composant (1, 2) ensemble.

2. Assemblage selon la revendication 1, dans lequel lesdites clavettes (21, 22) engagent individuellement et sont retenues par lesdites rainures individuelles (11, 13) des agencements à rainures (10, 12) pour bloquer le premier et le second composant (1, 2) ensemble.

3. Assemblage selon la revendication 1 ou 2, dans lequel l'une au moins desdites rainures (11, 13) comprend une portion de support de connecteur (14a, 14b, 14c) et une portion de retenue de clavette (15a, 15b, 15c), la portion de support de connecteur (14a, 14b, 14c) s'étendant au-dessous du connecteur à rainures-et-clavettes (3), et la portion de retenue de clavette (15a, 15b, 15c) s'étendant au-dessous d'une clavette (21, 22).

4. Assemblage selon l'une quelconque des revendications 1 à 3, dans lequel l'une au moins desdites rainures (11, 13) a la forme d'un crochet, et l'une au moins desdites clavettes (21, 22) est formée de manière à être retenue par le crochet.

5. Assemblage selon l'une quelconque des revendications 1 à 4, dans lequel chacun des côtés opposés du corps (20) comprend une pluralité de clavettes (21, 22) s'étendant dans le même plan, et les clavettes (21, 22) sont espacées les unes des autres en accord avec l'espacement des rainures (11, 13), la position des clavettes (21, 22) alternant depuis un côté du corps (20) à l'autre le long d'une longueur du corps (20), dans lequel les clavettes (21, 22) sont capables de coulisser jusqu'en engagement de blocage avec les rainures (11, 13), ou capables de coulisser hors de l'engagement de blocage avec les rainures (11, 13).

6. Assemblage selon l'une quelconque des revendications 1 à 5, dans lequel le connecteur à rainures-et-clavettes (3) comprend une poignée (23), un lobe, une surface d'agrippement, ou un troisième composant s'étendant depuis ou le long du corps allongé (20).

7. Assemblage selon l'une quelconque des revendications 1 à 6, dans lequel :
a) le premier composant a la forme d'un conteneur (1) et le second composant a la forme d'une fermeture (2) pour le conteneur (1), les agencements en rainure (10, 12) s'étendent le long d'une circonférence du conteneur (1) et de la fermeture (2), et le connecteur à rainures-et-clavettes (3) est annulaire ;
b) le premier composant a la forme d'une section de paroi cylindrique (1) d'un réservoir et le second composant a la forme d'une base en forme de disque (2) à connecter à la section de paroi (1) du réservoir, dans lequel les agencements en rainure (10, 12) s'étendent le long d'une circonférence de la section de paroi (1) et de la base (2), et le connecteur à rainures-et-clavettes (3) est annulaire ;
c) le premier et le second composant ont la forme de panneaux (31, 34) susceptibles d'être connectés bord-à-bord ou face-à-face de telle façon qu'ils s'étendent sensiblement dans le même plan ou à des angles différents l'un par rapport à l'autre ; ou
d) le premier et le second composant ont chacun la forme d'un tuyau, les agencements à rainures s'étendent autour des extrémités en butée desdits tuyaux, et le connecteur à rainures-et-clavettes est annulaire.

8. Assemblage selon l'une quelconque des revendications 1 à 6, dans lequel l'un au moins dudit premier et dudit second composant a la forme d'un composant cylindrique ou d'un composant arqué.

9. Assemblage selon l'une quelconque des revendications 1 à 6, dans lequel l'un au moins dudit premier et dudit second composant a la forme d'un composant annulaire.

10. Procédé pour connecter au moins un premier composant (1) et un second composant (2) ensemble pour créer l'assemblage de l'une quelconque des revendications 1 à 9, ledit procédé comprenant les étapes consistant à :
aligner les agencements à rainures (10, 12) du premier et du second composant (1, 2) de telle façon que les rainures (11, 13) viennent en engrènement mutuel pour constituer le passage en rainure (25) s'étendant longitudinalement entre les rainures (11, 13) en engrènement mutuel ; et
étendre le connecteur à rainures-et-clavettes (3) longitudinalement dans le passage en rainure (25), de quelle façon que les clavettes (21, 22) engagent les rainures (11, 13) des agencements à clavettes (10, 12) à fin de bloquer ensemble le premier et le second composant (1, 2).
